# NEUE EUROPÄISCHE PATENTSCHRIFT

(11) **EP 0 709 426 B2**
(45) Veröffentlichungstag und Bekanntmachung des Hinweises auf die Entscheidung über den Einspruch: **05.01.2005**
(45) Hinweis auf die Patenterteilung: 05.07.2000
(21) Anmeldenummer: 95810650.2
(22) Anmeldetag: 19.10.1995
(51) Int. Cl.: C08K 5/00, C08G 73/06

(54) **Synergistisches Stabilisatorgemisch**
Synergistic stabiliser mixture
Mélange de stabiliseurs synergistiques

(30) Priorität: 28.10.1994 EP 94810621; 20.04.1995 CH 113395
(43) Veröffentlichungstag der Anmeldung: 01.05.1996
(73) Patentinhaber: Ciba Specialty Chemicals Holding Inc., 4057 Basel (CH)
(72) Erfinder: Gugumus, François, CH-4123 Allschwil (CH)

(56) Entgegenhaltungen:
- EP-A- 0 080 431
- EP-A- 0 252 877
- EP-A- 0 345 220
- EP-A- 0 449 685
- EP-A- 0 754 722
- GB-A- 2 267 499
- US-A- 4 340 534
- US-A- 4 692 486
- US-A- 4 863 981
- US-A- 4 985 479
- US-A- 5 021 485
- US-A- 6 126 861
- RESEARCH DISCLOSURE, Nr. 345, 1.Januar 1993, Seiten 32-34, XP000336552 "SYNERGISTIC STABILIZER COMPOSITIONS"
- Ranby et al, Photodegradation, Photooxidation and Photostabilization of Polymers (John Wiley and Sons 1975) S. 418-422

## Beschreibung

Die vorliegende Erfindung betrifft ein Stabilisatorsystem enthaltend zwei spezifische polymere Polyalkylpiperidinderivate, die Verwendung dieses Stabilisatorsystems zum Stabilisieren von organischem Material sowie das mit dem erwähnten Stabilisatorsystem gegen thermischen, oxidativen oder lichtinduzierten Abbau geschützte organische Material.

In US-A-4 692 486, US-A-4 863 981, US-A-4 957 953, WO-A-92/12 201, EP-A-449 685, EP-A-632 092, GB-A-2 267 499 und in der Research Disclosure 34549 (Januar 1993) werden Stabilisatorgemische beschrieben, welche zwei Polyalkylpiperidinderivate enthalten.

Ein Gegenstand der vorliegenden Erfindung ist ein synergistisches Stabilisatorgemisch enthaltend mindestens eine Verbindung aus der Komponente a) und mindestens eine Verbindung aus der Komponente b) oder
enthaltend mindestens eine Verbindung aus der Komponente a) oder b) und mindestens eine Verbindung aus der Komponente d) oder
enthaltend mindestens zwei Verbindungen aus der Komponente a), wobei
die Komponente a) mindestens eine Verbindung der Formel I ist, 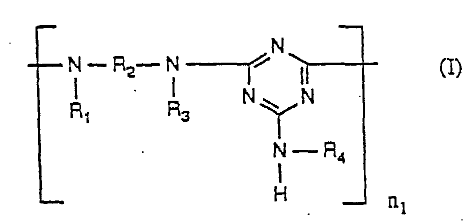 worin R₁, R₃ und R₄ unabhängig voneinander C₁-C₁₂-Alkyl, C₅-C₁₂-Cycloalkyl, durch C₁-C₄-Alkyl substituiertes C₅-C₁₂-Cycloalkyl, Phenyl, durch -OH und/oder C₁-C₁₀-Alkyl substituiertes Phenyl, C₇-C₉-Phenylalkyl, am Phenylrest durch -OH und/oder C₁-C₁₀-Alkyl substituiertes C₇-C₉-Phenylalkyl oder eine Gruppe der Formel II bedeuten, 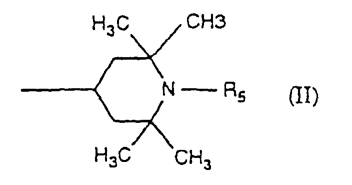 wobei R₅ Wasserstoff, C₁-C₈-Alkyl, O⁻, -CH₂CN, C₃-C₆-Alkenyl, C₇-C₉-Phenylalkyl, am Phenylrest durch C₁-C₄-Alkyl substituiertes C₇-C₉-Phenylalkyl oder C₁-C₈-Acyl ist, und
   R₁ und R₃ zusätzlich unabhängig voneinander Wasserstoff darstellen,
   R₂ C₂-C₁₈-Alkylen, C₅-C₇-Cycloalkylen oder C₁-C₄-Alkylendi(C₅-C₇-cycloalkylen) ist oder
   die Reste R₁, R₂ und R₃ zusammen mit den Stickstoffatomen, an die sie gebunden sind,
   einen 5- bis 10-gliedrigen heterocyclischen Ring bilden,
   n₁ eine Zahl von 2 bis 50 ist und mindestens einer der Reste R₁, R₃ und R₄ eine Gruppe der Formel II darstellt;
die Komponente b) mindestens eine Verbindung der Formel III ist, 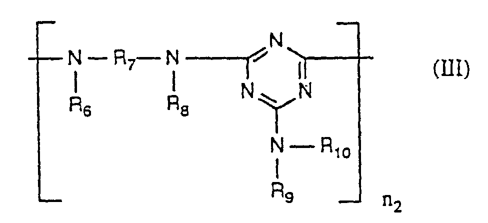 worin R₆ und R₈ unabhängig voneinander Wasserstoff, C₁-C₁₂-Alkyl, C₅-C₁₂-Cycloalkyl, durch C₁-C₄-Alkyl substituiertes C₅-C₁₂-Cycloalkyl, Phenyl, durch -OH und/oder
   C₁-C₁₀-Alkyl substituiertes Phenyl, C₇-C₉-Phenylalkyl, am Phenylrest durch -OH und/oder C₁-C₁₀-Alkyl substituiertes C₇-C₉-Phenylalkyl oder eine Gruppe der Formel II bedeuten,
   R₇ C₂-C₁₈-Alkylen, C₅-C₇-Cycloalkylen oder C₁-C₄-Alkylendi(C₅-C₇-cycloalkylen) ist oder
   die Reste R₆, R₇ und R₈ zusammen mit den Stickstoffatomen, an die sie gebunden sind, einen 5- bis 10-gliedrigen heterocyclischen Ring bilden,
   R₉ und R₁₀ unabhängig voneinander C₁-C₁₂-Alkyl, C₅-C₁₂-Cycloalkyl, durch C₁-C₄-Alkyl substituiertes C₅-C₁₂-Cycloalkyl, Phenyl, durch -OH und/oder C₁-C₁₀-Alkyl substituiertes Phenyl, C₇-C₉-Phenylalkyl, am Phenylrest durch -OH und/oder C₁-C₁₀-Alkyl substituiertes C₇-C₉-Phenylalkyl oder eine Gruppe der Formel II darstellen oder
   R₉ und R₁₀ zusammen mit dem Stickstoffatom, an das sie gebunden sind, einen 5- bis 10-gliedrigen heterocyclischen Ring bilden,
   n₂ eine Zahl von 2 bis 50 ist und mindestens einer der Reste R₆, R₈, R₉ und R₁₀ eine Gruppe der Formel (II) darstellt;
die Komponente d) mindestens eine Verbindung der Formeln Va und Vb ist, 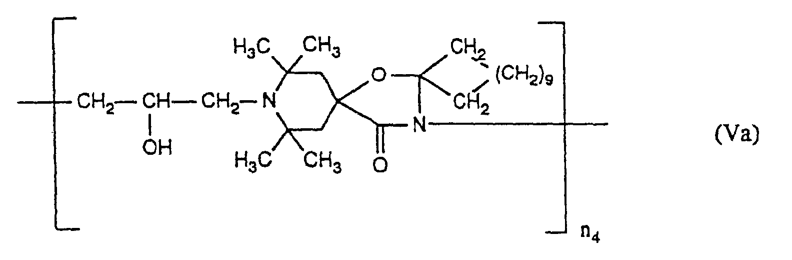 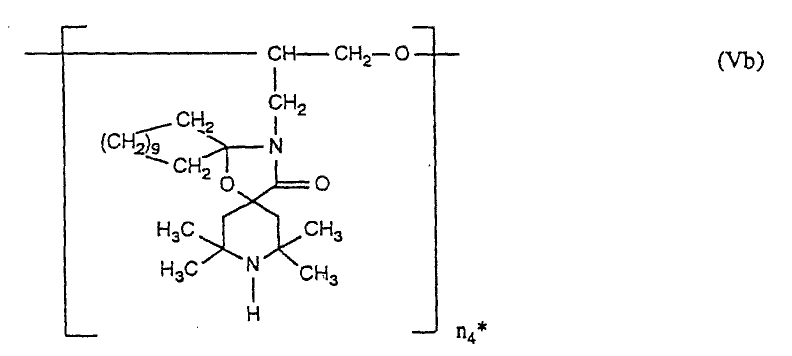 worin n₄ und n₄* unabhängig voneinander eine Zahl von 2 bis 50 sind;
mit der Bedingung, dass das Stabilisatorgemisch enthaltend mindestens eine Verbindung der Formel I, mindestens eine Verbindung der Formel III und mindestens eine Verbindung der Formel VI, 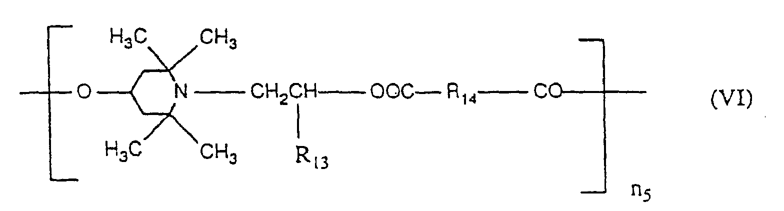 worin R₁₃ Wasserstoff oder Methyl bedeutet, R₁₄ eine direkte Bindung oder C₁-C₁₀-Alkylen ist und n₅ eine Zahl von 2 bis 100 darstellt, ausgeschlossen ist.

Ein Beispiel für C₅-C₇-Cycloalkylen ist Cyclohexylen.

Ein Beispiel für C₁-C₄-Alkylendi(C₅-C₇-cycloalkylen) ist Methylendicyclohexylen.

Bilden die Reste R₁, R₂ und R₃ oder die Reste R₆, R₇ und R₈ zusammen mit den Stickstoffatomen, an die sie gebunden sind, einen 5- bis 10-gliedrigen heterocyclischen Ring, so handelt es sich beispielweise um 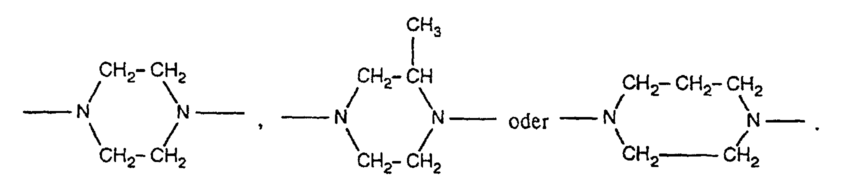 Ein 6-gliedriger heterocyclischer Ring ist bevorzugt.

Bilden die Reste R₉ und R₁₀ zusammen mit dem Stickstoffatom, an das sie gebunden sind, einen 5- bis 10-gliedrigen heterocyclischen Ring, so handelt es sich beispielsweise um 1-Pyrrolidyl, Piperidino, Morpholino, 1-Piperazinyl, 4-Methyl-1-piperazinyl, 1-Hexahydroazepinyl, 5,5,7-Trimethyl-1-homopiperazinyl oder 4,5,5,7-Tetramethyl-1-homopiperazinyl. Die Gruppe 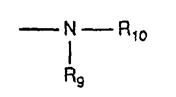 bedeutet besonders bevorzugt Morpholino.

R₁, R₃, R₆ und R₈ sind besonders bevorzugt eine Gruppe der Formel II.

Die als Komponenten a) ,b) und d) beschriebenen Verbindungen sind im wesentlichen bekannt (teilweise im Handel erhältlich) und können nach bekannten Verfahren, zum Beispiel wie in US-A-4 086 204, US-A-4 331 586, b) und und US-A-4 340 534 beschrieben, hergestellt werden.

Alkyl mit bis zu 12 Kohlenstoffatomen bedeutet beispielsweise Methyl, Ethyl, Propyl, Isopropyl, n-Butyl, tert-Butyl, Pentyl, Hexyl, Octyl, 1,1,3,3-Tetramethylbutyl, Nonyl, Decyl, Undecyl oder Dodecyl. Eine der bevorzugten Bedeutungen für R₁, R₃, R₆ und R₈ ist C₁-C₄-Alkyl. R₁₀ und R₁₁ sind bevorzugt C₁-C₈-Alkyl, insbesondere n-Butyl. R₄ bedeutet bevorzugt C₁-C₁₀-Alkyl, insbesondere 1,1,3,3-Tetramethylbutyl. Eine der bevorzugten Bedeutungen für R₅ ist C₁-C₄-Alkyl, insbesondere Methyl.

C₅-C₁₂-Cycloalkyl bedeutet zum Beispiel Cyclopentyl, Cyclohexyl, Cycloheptyl, Cyclooctyl, Cyclodecyl oder Cyclododecyl. C₅-C₇-Cycloalkyl ist bevorzugt, insbesondere Cyclohexyl. Eine weitere bevorzugte Bedeutung von R₄ ist Cyclohexyl.

Durch C₁-C₄-Alkyl substituiertes C₅-C₁₂-Cycloalkyl bedeutet zum Beispiel Methylcyclohexyl oder Dimethylcyclohexyl.

Durch -OH und/oder C₁-C₁₀-Akyl substituiertes Phenyl bedeutet zum Beispiel Methylphenyl, Dimethylphenyl, Trimethylphenyl, tert-Butylphenyl oder 3,5-Di-tert-butyl-4-hydroxyphenyl.

C₇-C₉-Phenylalkyl bedeutet bevorzugt Benzyl.

Am Phenylrest durch -OH und/oder C₁-C₁₀-Alkyl substituiertes C₇-C₉-Phenylalkyl bedeutet zum Beispiel Methylbenzyl, Dimethylbenzyl, Trimethylbenzyl, tert-Butylbenzyl oder 3,5-Di-tert-butyl-4-hydroxybenzyl.

Am Phenylrest durch C₁-C₄-Alkyl substituiertes C₇-C₉-Phenylalkyl bedeutet zum Beispiel Methylbenzyl, Dimethylbenzyl, Trimethylbenzyl oder tert-Butylbenzyl.

Beispiele für C₃-C₆-Alkenyl sind Allyl, 2-Methallyl, Butenyl, Pentenyl und Hexenyl. Allyl ist bevorzugt.

R₅ als C₁-C₈-Acyl bedeutet bevorzugt C₁-C₈-Alkanoyl, C₃-C₈-Alkenoyl oder Benzoyl. Beispiele sind Formyl, Acetyl, Propionyl, Butyryl, Pentanoyl, Hexanoyl, Octanoyl, Benzoyl, Acryloyl und Crotonoyl.

Beispiele für Alkylen mit bis zu 18 Kohlenstoffatomen sind Ethylen, Propylen, Trimethylen, Tetramethylen, Pentamethylen, 2,2-Dimethyltrimethylen, Hexamethylen, Trimethylhexamethylen, Octamethylen, Decamethylen, Undecamethylen und Dodecamethylen. R₂ und R₇ bedeuten bevorzugt C₂-C₆-Alkylen. R₂ und R₇ sind besonders bevorzugt Hexamethylen.

Die Verbindung der Formel VI bedeutet insbesondere ®TINUVIN 622 und kann zum Beispiel in Analogie zu den in US-A-4 233 412 beschriebenen Verfahren hergestellt werden.

Die Verbindungen der Formeln Va und Vb können zusammen als Gemisch anfallen, wobei das Verhältnis von Va:Vb z.B. 20:1 bis 1:20 oder 1:10 bis 10:1 betragen kann.

Die Bedeutungen der Endgruppen, die in den Verbindungen der Formeln I, III, IVa, IVb, Va und Vb die freien Valenzen absättigen, sind abhängig von den zur Herstellung benutzten Verfahren. Die Endgruppen können auch nach der Herstellung der Verbindungen noch modifiziert werden.

Erfolgt die Herstellung der Verbindungen der Formeln I und III durch Umsetzung einer

Verbindung der Formel 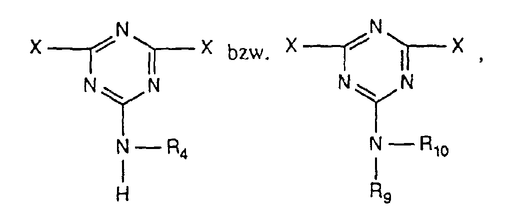 worin X beispielsweise Halogen, insbesondere Chlor, bedeutet und R₄, R₉ und R₁₀ die oben angegebenen Bedeutungen besitzen, mit einer Verbindung der Formel 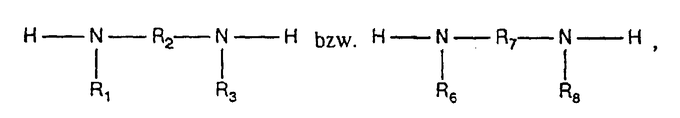 worin R₁, R₂, R₃, R₆, R₇ und R₈ die oben angegebenen Bedeutungen haben, so ist die Endgruppe, die an den Diaminorest gebunden ist Wasserstoff oder 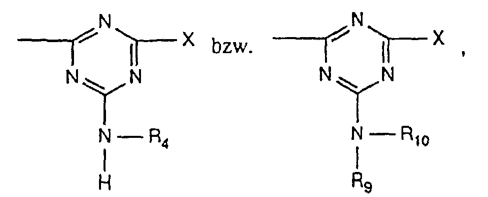 und die Endgruppe, die an den Triazinrest gebunden ist, X oder

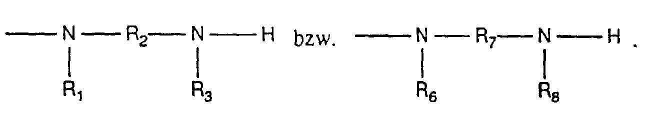

Bedeutet X ein Halogen, so ist es vorteilhaft, dieses nach beendeter Umsetzung z.B. durch -OH oder eine Aminogruppe auszutauschen. Als Beispiele für Aminogruppen seien genannt: Pyrrolidin-1-yl, Morpholino, -NH₂, -N (C₁-C₈-Alkyl)₂ und -NR(C₁-C₈-Alkyl), worin R Wasserstoff oder eine Gruppe der Formel II ist.

in den Verbindungen der Formel IV ist die Endgruppe, die an den Triazinrest gebunden ist, zum Beispiel Cl oder eine Gruppe 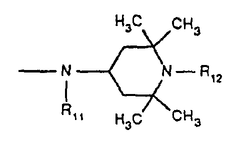 und die Endgruppe, die an den Aminorest gebunden ist, zum Beispiel Wasserstoff oder eine Gruppe

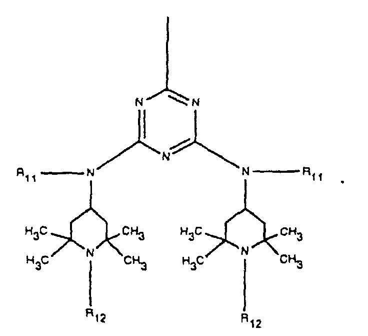

In den Verbindungen der Formel Va kann die Endgruppe, die an den Stickstoff gebunden ist, z. B. Wasserstoff bedeuten und die Endgruppe, die an den 2-Hydroxypropylenrest gebunden ist, kann z. B. eine Gruppe 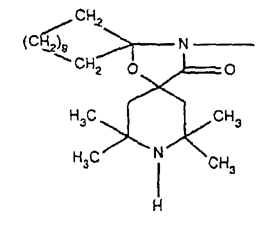 sein.

In den Verbindungen der Formel Vb kann die Endgruppe, die an den Dimethylenrest gebunden ist, z. B. -OH bedeuten und die Endgruppe, die an den Sauerstoff gebunden ist, kann z. B. Wasserstoff sein. Die Endgruppen können auch Polyetherreste darstellen.

Erfolgt die Herstellung der Verbindungen der Formel VI z.B. durch Umsetzung einer Verbindung der Formel 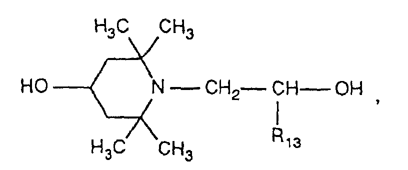 worin R₁₃ Wasserstoff oder Methyl bedeutet, mit einem Dicarbonsäurediester der Formel Y-OOC-R₁₄-COO-Y, worin Y beispielsweise Methyl, Ethyl oder Propyl ist und R₁₄ die oben angegebene Bedeutung hat, so ist die Endgruppe, die an den 2,2,6,6-Tetramethyl-4-oxypiperidin-1-ylrest gebunden ist, Wasserstoff oder -CO-R₁₄-COO-Y und die Endgruppe, die an den Diacylrest gebunden ist, bedeutet -O-Y oder

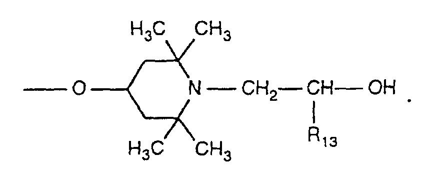

Bei den folgenden Stabilisatorsystemen handelt es sich um besonders bevorzugte Ausführungsformen der Erfindung:
1) Stabilisatorsystem enthaltend ®CHIMASSORB 944 und ®CYASORB UV 3346,
2) Stabilisatorsystem enthaltend ®DASTIB 1082 und ®CYASORB UV 3346,
3) Stabilisatorsystem enthaltend ®CHIMASSORB 944 und ®HOSTAVIN N 30,
4) Stabilisatorsystem enthaltend ®DASTIB 1082 und ®HOSTAVIN N 30,
5) Stabilisatorsystem enthaltend ®CYASORB UV 3346 und ®HOSTAVIN N 30,
6) Stabilisatorsystem enthaltend ®CHIMASSORB 944 und ®DASTIB 1082.

Bevorzugt ist auch ein Stabilisatorgemisch, worin R₅ Wasserstoff, C₁-C₄-Alkyl, Allyl, Benzyl oder Acetyl, insbesondere Wasserstoff oder Methyl, bedeutet.

Weiterhin bevorzugt ist ein Stabilisatorgemisch, worin
R₁, R₃ und R₄ unabhängig voneinander C₁-C₁₀-Alkyl, C₅-C₇-Cycloalkyl, durch C₁-C₄-Alkyl substituiertes C₅-C₇-Cycloalkyl, Phenyl, durch OH und/oder C₁-C₄-Alkyl substituiertes Phenyl, C₇-C₉-Phenylalkyl, am Phenylrest durch -OH und/oder C₁-C₄-Alkyl substituiertes C₇-C₉-Phanylalkyl oder eine Gruppe der Formel II bedeuten und
R₁ und R₃ zusätzlich unabhängig voneinander Wasserstoff darstellen,
R₂ C₂-C₁₀-Alkylen, C₅-C₇-Cycloalkylen oder C₁-C₄-Alkylendi(C₅-C₇-cycloalkylen) ist oder
die Reste R₁, R₂ und R₃ zusammen mit den Stickstoffatomen, an die sie gebunden sind,
einen 5- bis 7-gliedrigen heterocyclischen Ring bilden und
n₁ eine Zahl von 2 bis 40 ist;

R₆ und R₈ unabhängig voneinander Wasserstoff, C₁-C₁₀-Alkyl, C₅-C₇-Cycloalkyl, durch C₁-C₄-Alkyl substituiertes C₅-C₇-Cycloalkyl, Phenyl, durch OH und/oder C₁-C₄-Alkyl substituiertes Phenyl, C₇-C₉-Phenylalkyl, am Phenylrest durch -OH und/oder C₁-C₄-Alkyl substituiertes C₇-C₉-Phenylalkyl oder eine Gruppe der Formel II bedeuten,
R₇ C₂-C₁₀-Alkylen, C₅-C₇-Cycloalkylen oder C₁-C₄-Alkylendi(C₅-C₇-cycloalkylen) ist oder
die Reste R₆, R₇ und R₈ zusammen mit den Stickstoffatomen, an die sie gebunden sind, einen 5- bis 7-gliedrigen heterocyclischen Ring bilden,
R₉ und R₁₀ unabhängig voneinander C₁-C₁₀-Alkyl, C₅-C₇-Cycloalkyl, durch C₁-C₄-Alkyl substituiertes C₅-C₇-Cycloalkyl, Phenyl, durch OH und/oder C₁-C₄-Alkyl substituiertes Phenyl, C₇-C₉-Phenylalkyl, am Phenylrest durch -OH und/oder C₁-C₄-Alkyl substituiertes C₇-C₉-Phenylalkyl oder eine Gruppe der Formel II bedeuten oder
R₉ und R₁₀ zusammen mit dem Stickstoffatom, an das sie gebunden sind, einen 5- bis 7-gliedrigen heterocyclischen Ring bilden und
n₂ eine Zahl von 2 bis 40 ist;
n₄ und n₄* unabhängig voneinander eine Zahl von 2 bis 40 sind.

Ebenfalls bevorzugt ist ein Stabilisatorgemisch, worin
R₁ und R₃ unabhängig voneinander Wasserstoff, C₁-C₈-Alkyl, C₅-C₇-Cycloalkyl, Phenyl, Benzyl oder eine Gruppe der Formel II bedeuten,
R₂ C₂-C₈-Alkylen, Cyclohexylen oder Methylendi(cyclohexylen) ist,
R₄ C₁-C₁₀-Alkyl, C₅-C₇-Cycloalkyl oder durch C₁-C₄-Alkyl substituiertes C₅-C₇-Cycloalkyl darstellt und
n₁ eine Zahl von 2 bis 25 ist;
R₆ und R₈ unabhängig voneinander Wasserstoff, C₁-C₈-Alkyl, C₅-C₇-Cycloalkyl, Phenyl,

Benzyl oder eine Gruppe der Formel II bedeuten,
R₇ C₂-C₈-Alkylen, Cyclohexylen oder Methylendi(cyclohexylen) ist,
R₉ und R₁₀ unabhängig voneinander C₁-C₈-Alkyl, C₅-C₇-Cycloalkyl, Phenyl, Benzyl oder eine Gruppe der Formel II sind oder
R₉ und R₁₀ zusammen mit dem Stickstoffatom, an das sie gebunden sind, 1-Pyrrolidyl, Piperidino, Morpholino, 1-Piperazinyl, 4-Methyl-1-piperazinyl, 1-Hexahydroazepinyl, 5,5,7-Trimethyl-1-homopiperazinyl oder 4,5,5,7-Tetramethyl-1-homopiperazinyl bedeuten und
n₂ eine Zahl von 2 bis 25 ist; und
n₄ und n₄* unabhängig voneinander eine Zahl von 2 bis 25 sind.

Ein Stabilisatorgemisch enthaltend mindestens eine Verbindung aus der Komponente a) und mindestens eine Verbindung aus der Komponente b) ist besonders bevorzugt.

Bevorzugt ist auch ein Stabilisatorgemisch bestehend aus einer Verbindung der Formel I und einer Verbindung der Formel III.

Eine weitere bevorzugte Ausführungsform der Erfindung ist ein Stabilisatorgemisch, worin
R₁ und R₃ unabhängig voneinander Wasserstoff, C₁-C₄-Alkyl oder eine Gruppe der Formel II bedeuten, worin
R₅ Wasserstoff oder Methyl ist,
R₂ C₂-C₆-Alkylen darstellt,
R₄ C₁-C₁₀-Alkyl oder Cyclohexyl ist und
n₁ eine Zahl von 2 bis 20 bedeutet;
R₆ und R₈ unabhängig voneinander Wasserstoff, C₁-C₄-Alkyl oder eine Gruppe der Formel II bedeuten, worin
R₅ Wasserstoff oder Methyl ist,
R₇ C₂-C₆-Alkylen ist,
R₉ und R₁₀ unabhängig voneinander C₁-C₈-Alkyl oder eine Gruppe der Formel II sind, worin R₅ die oben angegebene Bedeutung hat, oder
R₉ und R₁₀ zusammen mit dem Stickstoffatom, an das sie gebunden sind, Morpholino bilden und
n₂ eine Zahl von 2 bis 20 bedeutet; und
n₄ und n₄* unabhängig voneinander eine Zahl von 2 bis 20 sind.

Eine besonders bevorzugte Ausführungsform der Erfindung ist ein Stabilisatorgemisch, worin die Verbindung der Formel I 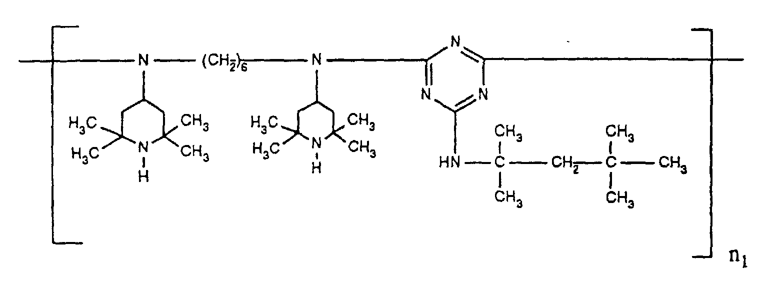 oder 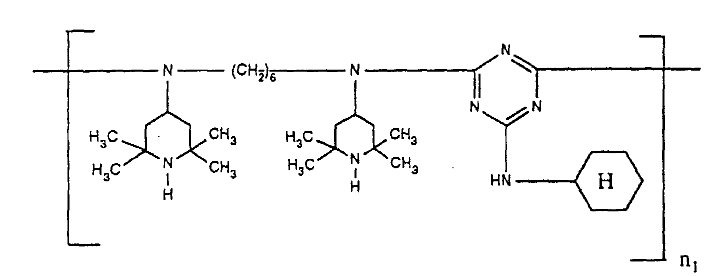 ist und die Verbindung der Formel III 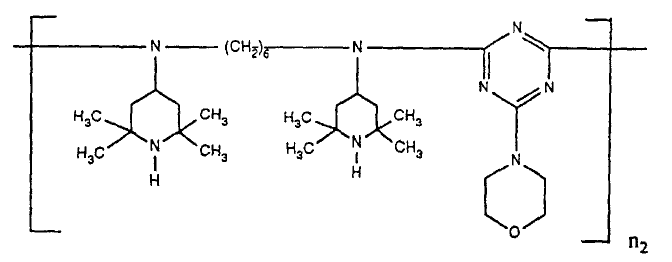 bedeutet und
n₁, n₂, n₄ und n₄* unabhängig voneinander eine Zahl von 2 bis 20 bedeuten.

Eine weitere besonders bevorzugte Ausführungsform der Erfindung ist ein Stabilisatorgemisch enthaltend die Verbindungen 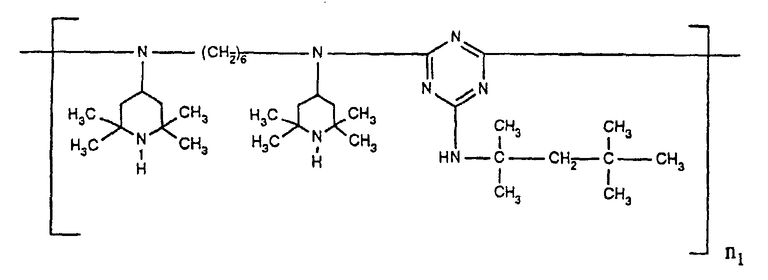 und 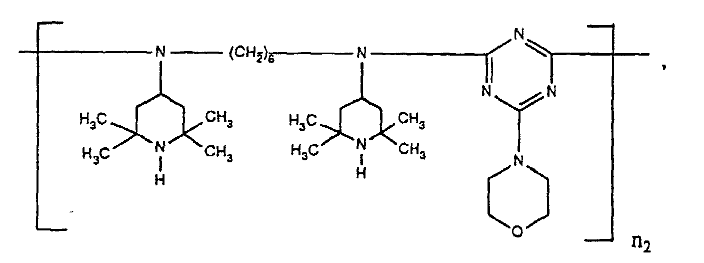 wobei n₁ und n₂ unabhängig voneinander eine Zahl von 2 bis 20 bedeuten.

Ebenfalls besonders bevorzugte Ausführungsformen der Erfindung sind:
ein Stabilisatorgemisch enthaltend ein Gemisch der Verbindungen Va und Vb, worin n₄ und n₄* unabhängig voneinander eine Zahl von 2 bis 20 sind, und die Verbindung 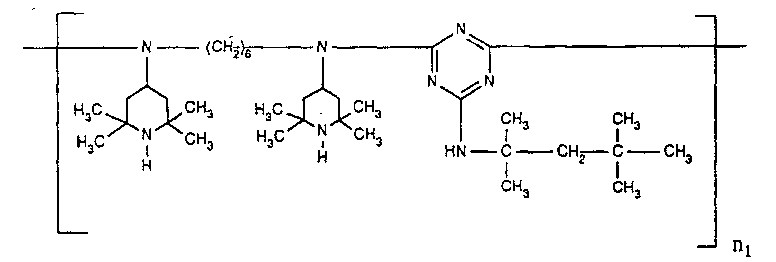 oder 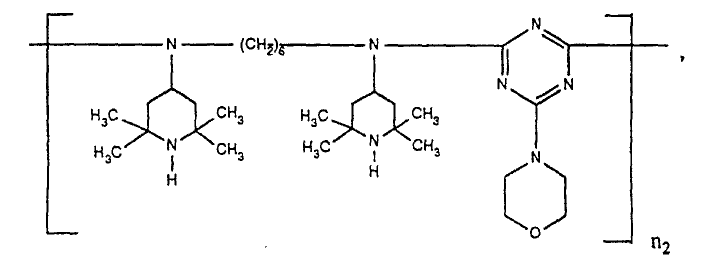 wobei n₁ und n₂ unabhängig voneinander eine Zahl von 2 bis 20 bedeuten.

Das erfindungsgemässe Stabilisatorgemisch eignet sich zum Stabilisieren von organischen Materialien gegen thermischen, oxidativen oder lichtinduzierten Abbau. Beispiele für derartige Materialien sind:
1. Polymere von Mono- und Diolefinen, beispielsweise Polypropylen, Polyisobutylen, Polybuten-1, Poly-4-methylpenten-1, Polyisopren oder Polybutadien sowie Polymerisate von Cycloolefinen wie z.B. von Cyclopenten oder Norbornen; ferner Polyethylen (das gegebenenfalls vernetzt sein kann), z.B. Polyethylen hoher Dichte (HDPE), Polyethylen niederer Dichte (LDPE), lineares Polyethylen niederer Dichte (LLDPE), verzweigtes Polyethylen niederer Dichte (VLDPE).
   Polyolefine, d.h. Polymere von Monoolefinen, wie sie beispielhaft im vorstehenden Absatz erwähnt sind, insbesondere Polyethylen und Polypropylen, können nach verschiedenen Verfahren hergestellt werden, insbesondere nach den folgenden Methoden:
   a) radikalisch (gewöhnlich bei hohem Druck und hoher Temperatur).
   b) mittels Katalysator, wobei der Katalysator gewöhnlich ein oder mehrere Metalle der Gruppe IVb, Vb, Vlb oder VIII enthält. Diese Metalle besitzen gewöhnlich einen oder mehrere Liganden wie Oxide, Halogenide, Alkoholate, Ester, Ether, Amine, Alkyle, Alkenyle und/oder Aryle, die entweder π- oder σ-koordiniert sein können. Diese Metallkomplexe können frei oder auf Träger fixiert sein, wie beispielsweise auf aktiviertem Magnesiumchlorid, Titan(III)chlorid, Aluminiumoxid oder Siliziumoxid. Diese Katalysatoren können im Polymerisationsmedium löslich oder unlöslich sein. Die Katalysatoren können als solche in der Polymerisation aktiv sein, oder es können weitere Aktivatoren verwendet werden, wie beispielsweise Metallalkyle, Metallhydride, Metallalkylhalogenide, Metallalkyloxide oder Metallalkyloxane, wobei die Metalle Elemente der Gruppen la, IIa und/oder IIIa sind. Die Aktivatoren können beipielsweise mit weiteren Ester-, Ether-, Amin- oder Silylether-Gruppen modifiziert sein. Diese Katalysatorsysteme werden gewöhnlich als Phillips, Standard Oil Indiana, Ziegler (-Natta), TNZ (DuPont), Metallocen oder Single Site Katalysatoren (SSC) bezeichnet.
2. Mischungen der unter 1) genannten Polymeren, z.B. Mischungen von Polypropylen mit Polyisobutylen, Polypropylen mit Polyethylen (z.B. PP/HDPE, PP/LDPE) und Mischungen verschiedener Polyethylentypen (z.B. LDPE/HDPE).
3. Copolymere von Mono- und Diolefinen untereinander oder mit anderen Vinylmonomeren, wie z.B. Ethylen-Propylen-Copolymere, lineares Polyethylen niederer Dichte (LLDPE) und Mischungen desselben mit Polyethylen niederer Dichte (LDPE), Propylen-Buten-1-Copolymere, Propylen-Isobutylen-Copolymere, Ethylen-Buten-1-Copolymere, Ethylen-Hexen-Copolymere, Ethylen-Methylpenten-Copolymere, Ethylen-Hepten-Co-polymere, Ethylen-Octen-Copolymere, Propylen-Butadien-Copolymere, Isobutylen-Isopren-Copolymere, Ethylen-Alkylacrylat-Copolymere, Ethylen-Alkylmethacrylat- Copolymere, Ethylen-Vinylacetat-Copolymere und deren Copolymere mit Kohlenstoffmonoxid, oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen; ferner Mischungen solcher Copolymere untereinander und mit unter 1) genannten Polymeren, z.B. Polypropylen/Ethylen-Propy-Ion-Copolymere, LDPE/Ethylen-Vinylacetat-Copolymere, LDPE/Ethylen-Acrylsäure-Copolymere, LLDPE/Ethylen-Vinylacetat-Copolymere, LLDPE/Ethylen-Acrylsäure-Copolymere und alternierend oder statistisch aufgebaute Polyalkylen/Kohlenstoffmonoxid-Copolymere und deren Mischungen mit anderen Polymeren wie z.B. Polyamiden.
4. Kohlenwasserstoffharze (z.B. C₅-C₉) inklusive hydrierte Modifikationen davon (z.B. Klebrigmacherharze) und Mischungen von Polyalkylenen und Stärke.
5. Polystyrol, Poly-(p-methylstyrol), Poly-(a-methylstyrol).
6. Copolymere von Styrol oder α-Methylstyrol mit Dienen oder Acrylderivaten, wie z.B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z.B. einem Polyacrylat, einem Dien-Polymeren oder einem Ethylen-Propylen-Dien-Terpolymeren; sowie Block-Copolymere des Styrols, wie z.B. Styrol-Butadien-Styrol, Styrol-Isopren-Styrol, Styrol-Ethylen/Butylen-Styrol oder Styrol-Ethylen/Propylen-Styrol.
7. Pfropfcopolymere von Styrol oder α-Methylstyrol, wie z.B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen mit den unter 6) genannten Copolymeren, wie sie z.B. als sogenannte ABS-, MBS-, ASA- oder AES-Polymere bekannt sind.
8. Halogenhaltige Polymere, wie z.B. Polychloropren, Chlorkautschuk, chloriertes oder chlorsulfoniertes Polyethylen, Copolymere von Ethylen und chloriertem Ethylen, Epichlorhydrinhomo- und -copolymere, insbesondere Polymere aus halogenhaltigen Vinylverbindungen, wie z.B. Polyvinylchlorid, Polyvinylidenchlorid, Polyvinylfluorid, Polyvinylidenfluorid; sowie deren Copolymere, wie Vinylchlorid-Vinylidenchlorid, Vinylchlorid-Vinylacetat oder Vinylidenchlorid-Vinylacetat.
9. Polymere, die sich von α,β-ungesättigten Säuren und deren Derivaten ableiten, wie Polyacrylate und Polymethacrylate, mit Butylacrylat schlagzäh modifizierte Polymethylmethacrylate, Polyacrylamide und Polyacrylnitrile.
10. Copolymere der unter 9) genannten Monomeren untereinander oder mit anderen ungesättigten Monomeren, wie z.B. Acrylnttril-Butadien-Copolymere, Acrylnitril-Alkylacrylat-Copolymere, Acrylnitril-Alkoxyalkylacrylat-Copolymere, Acrylnitril-Vinylhalogenid-Copolymere oder Acrylnitril-Alkylmethacrylat-Butadien-Terpolymere.
11. Polymere, die sich von ungesättigten Alkoholen und Aminen bzw. deren Acylderivaten oder Acetalen ableiten, wie Polyvinylalkohol, Polyvinylacetat, -stearat, -benzoat, -maleat, Polyvinylbutyral, Polyallylphthalat, Polyallylmelamin; sowie deren Copolymere mit in Punkt 1 genannten Olefinen.
12. Homo- und Copolymere von cyclischen Ethern, wie Polyalkylenglykole, Polyethylenoxyd, Polypropylenoxyd oder deren Copolymere mit Bisglycidylethern.
13. Polyacetale, wie Polyoxymethylen, sowie solche Polyoxymethylene, die Comonomere, wie z.B. Ethylenoxid, enthalten; Polyacetale, die mit thermoplastischen Polyurethanen, Acrylaten oder MBS modifiziert sind.
14. Polyphenylenoxide und -sulfide und deren Mischungen mit Styrolpolymeren oder Polyamiden.
15. Polyurethane, die sich von Polyethern, Polyestern und Polybutadienen mit endständigen Hydroxylgruppen einerseits und aliphatischen oder aromatischen Polyisocyanaten andererseits ableiten, sowie deren Vorprodukte.
16. Polyamide und Copolyamide, die sich von Diaminen und Dicarbonsäuren und/oder von Aminocarbonsäuren oder den entsprechenden Lactamen ableiten, wie Polyamid 4, Polyamid 6, Polyamid 6/6, 6/10, 6/9, 6/12, 4/6, 12/12, Polyamid 11, Polyamid 12, aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z.B. Poly-2,4,4-trimethylhexamethylenterephthalamid oder Poly-m-phenylen-isophthalamid. Block-Copolymere der vorstehend genanntenPolyamide mit Polyolefinen, Olefin-Copolymeren, lonomeren oder chemisch gebundenen oder gepfropften Elastomeren; oder mit Polyethern, wie z.B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").
17. Polyharnstoffe, Polyimide, Polyamid-imide und Polybenzimidazole.
18. Polyester, die sich von Dicarbonsäuren und Dialkoholen und/oder von Hydroxycarbonsäuren oder den entsprechenden Lactonen ableiten, wie Polyethylenterephthalat, Polybutylenterephthalat, Poly-1,4-dimethylolcyclohexanterephthalat, Polyhydroxybenzoate, sowie Block-Polyether-ester, die sich von Polyethern mit Hydroxylendgruppen ableiten; ferner mit Polycarbonaten oder MBS modifizierte Polyester.
19. Polycarbonate und Polyestercarbonate.
20. Polysulfone, Polyethersulfone und Polyetherketone.
21. Vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze.
22. Trocknende und nicht-trocknende Alkydharze.
23. Ungesättigte Polyesterharze, die sich von Copolyestern gsättigter und ungesättigter Dicarbonsäuren mit mehrwertigen Alkoholen, sowie Vinylverbindungen als Vernetzungsmittel ableiten, wie auch deren halogenhaltige, schwerbrennbare Modifikationen.
24. Vernetzbare Acrylharze, die sich von substituierten Acrylsäureestern ableiten, wie z.B. von Epoxyacrylaten, Urethan-acrylaten oder Polyester-acrylaten.
25. Alkydharze, Polyesterharze und Acrylatharze, die mit Melaminharzen, Harnstoffharzen, Polyisocyanaten oder Epoxidharzen vernetzt sind.
26. Vernetzte Epoxidharze, die sich von Polyepoxiden ableiten, z.B. von Bis-glycidylethern oder von cycloaliphatischen Diepoxiden.
27. Natürliche Polymere, wie Cellulose, Naturkautschuk, Gelatine, sowie deren polymerhomolog chemisch abgewandelte Derivate, wie Celluloseacetate, -propionate und -butyrate, bzw. die Celluloseether, wie Methylcellulose; sowie Kolophoniumharze und Derivate.
28. Mischungen (Polyblends) der vorgenannten Polymeren, wie z.B. PP/EPDM, Polyamid/EPDM oder ABS, PVC/EVA, PVC/ABS, PVC/MBS, PC/ABS, PBTP/ABS, PC/ASA, PC/PBT, PVC/CPE, PVC/Acrylate, POM/thermoplastisches PUR, PC/thermoplastisches PUR, POM/Acrylat, POM/MBS, PPO/HIPS, PPO/PA 6.6 und Copolymere, PA/HDPE, PA/PP, PA/PPO.
29. Natürliche und synthetische organische Stoffe, die reine monomere Verbindungen oder Mischungen von solchen darstellen, beispielsweise Mineralöle, tierische oder pflanzliche Fette, Oele und Wachse, oder Oele, Wachse und Fette auf Basis synthetischer Ester (z.B. Phthalate, Adipate, Phosphate oder Trimellitate), sowie Abmischungen synthetischer Ester mit Mineralölen in beliebigen Gewichtsverhältnissen, wie sie z.B. als Spinnpräparationen Anwendung finden, sowie deren wässrige Emulsionen.
30. Wässrige Emulsionen natürlicher oder synthetischer Kautschuke, wie z.B. Naturkautschuk-Latex oder Latices von carboxylierten Styrol-Butadien-Copolymeren.

Ein weiterer Gegenstand der Erfindung ist daher eine Zusammensetzung enthaltend ein gegen oxidativen, thermischen oder lichtinduzierten Abbau empfindliches organisches Material und ein erfindungsgemässes Stabilisatorgemisch.

Bei dem organischen Material handelt es sich vorzugsweise um synthetische Polymere, insbesondere solche aus den oben angegebenen Gruppen. Polyolefine sind bevorzugt und Polyethylen, Polypropylen und deren Copolymere sind besonders bevorzugt.

Die Verbindungen des erfindungsgemässen Stabilisatorsystems können einzeln oder miteinander vermischt dem zu stabilisierenden Material zugesetzt werden. Dabei können die Verbindungen zum Beispiel unabhängig voneinander in Mengen von 0,01 bis 4,99 % eingesetzt werden mit der Bedingung, dass die Gesamtmenge des erfindungsgemässen Stabilisatorgemisches vorzugsweise 0,02 bis 5 %, bezogen auf das Gesamtgewicht des zu stabilisierenden Materials beträgt.

Bevorzugt beträgt die Gesamtmenge des erfindungsgemässen Stabilisatorsystems 0,05 bis 3 %, insbesondere 0,05 bis 2 % oder 0,05 bis 1 %, bezogen auf das Gesamtgewicht des zu stabilisierenden Materials.

Das Gewichtsverhältnis der beiden Verbindungen des erfindungsgemässen Stabilisatorsystems beträgt bevorzugt 20:1 bis 1:20, insbesondere 10:1 bis 1:10, beispielsweise 1:5 bis 5:1.

Die Einarbeitung des erfindungsgemässen Stabilisatorgemisches bzw. der Einzelverbindungen in das organische Material kann nach bekannten Methoden erfolgen, beispielsweise vor oder während der Formgebung oder durch Aufbringen der gelösten oder dispergierten Verbindungen auf das organische Material, gegebenenfalls unter nachträglichem Verdunsten des Lösungsmittels. Die einzelnen Verbindungen des erfindungsgemässen Stabilisatorgemisches können als Pulver, Granulat oder auch in Form eines Masterbatches, der diese beispielsweise in einer Konzentration von 2,5 bis 25 Gew.-% enthält, den zu stabilisierenden Materialien zugesetzt werden.

Falls gewünscht, können die Verbindungen des erfindungsgemässen Stabilisatorsystems vor der Einarbeitung in der Schmelze miteinander vermischt werden (melt-blending).

Das erfindungsgemässe Stabilisatorsystem oder dessen Verbindungen können vor oder während der Polymerisation oder vor der Vernetzung zugegeben werden.

Die so stabilisierten Materialien können in verschiedenster Form angewendet werden, z.B. als Folien, Fasern, Bändchen, Formmassen, Profile oder als Bindemittel für Lacke, Klebstoffe oder Kitte.

Die stabilisierten organischen Materialien der Erfindung können zusätzlich auch verschiedene herkömmliche Additive enthalten, wie beispielsweise:

### 1. Antioxidantien

1.1. Alkylierte Monophenole, z.B. 2,6-Di-tert-butyl-4-methylphenol, 2-butyl-4,6-dimethylphenol, 2,6-Di-tertbutyl-4-ethylphenol, 2,6-Di-tert-butyl-4-n-butylphenol, 2,6-Di-tert-butyl-4-iso-butylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, 2,6-Di-nonyl-4-methylphenol, 2,4-Dimethyl-6-(1'-methyl-undec-1'-yl)-phenol, 2,4-Dimethyl-6-(1'-methyl-heptadec-1'-yl)-phenol, 2,4-Dimethyl-6-(1'-methyl-tridec-1'-yl)-phenol und Mischungen davon.

1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol.

1.3. Hydrochinone und alkylierte Hydrochinone, z. B. 2,6-Di-tert-butyl-4-methoxyphenol, 2,5-Di-tert-butyl-hydrochinon, 2,5-Di-tert-amyl-hydrochinon, 2,6-Diphenyl-4-octadecyl-oxyphenol, 2,6-Di-tert-butyl-hydrochinon, 2,5-Ditert-butyl-4-hydroxyanisol, 3,5-Di-tert-butyl-4-hydroxyanisol, 3,5-Di-tert-butyl-4-hydroxyphenyl-stearat, Bis-(3,5-ditert-butyl-4-hydroxyphenyl)adipat.

1.4. Tocopherole, z.B. α-Tocopherol, β-Tocopherol, γ-Tocopherol, δ-Tocopherol und Mischungen davon (Vitamin E).

1.5. HydroxylierteThiodiphenylether, z.B. 2,2'-Thio-bis-(6-tert-butyl-4-methylphenol), 2,2'-Thio-bis-(4-octylphenol), 4,4'-Thio-bis-(6-tert-butyl-3-methylphenol), 4,4'-Thio-bis-(6-tert-butyl-2-methylphenol), 4,4'-Thio-bis-(3,6-disec.-amylphenol), 4,4'-Bis-(2,6-dimethyl-4-hydroxyphenyl)-disulfid.

1.6. Alkyliden-Bisphenole, z.B. 2,2'-Methylen-bis-(6-tert-butyl-4-methylphenol), 2,2'-Methylen-bis-(6-tert-butyl-4-ethylphenol), 2,2'-Mothylen-bis-[4-methyl-6-(α-methylcyclohexyl)-phenol], 2,2'-Methylen-bis-(4-methyl-6-cyclohexytphenol), 2,2'-Methylen-bis-(6-nonyl-4-methylphenol), 2,2'-Methylen-bis-(4,6-di-tert-butylphenol), 2,2'-Ethylidenbis-(4,6-di-tert-butylphenol), 2,2'-Ethyliden-bis-(6-*tert*-butyl-4-isobutylphenol), 2,2'-Methylen-bis-[6-(α-methylbenzyl)-4-nonylphenol], 2,2'-Methylen-bis-[6-(α,α-dimethylbenzyl)-4-nonylphenol], 4,4'-Methylen-bis-(2,6-di-tert-butylphenol), 4,4'-Methylen-bis-(6-tert-butyl-2-methylphenol), 1,1-Bis-(5-tert-butyl-4-hydroxy-2-methylphenyl)butan, 2,6-Bis-(3-tertbutyl-5-methyl-2-hydroxybenzyl)-4-methylphenol, 1,1,3-Tris-(5-tert-butyl-4-hydroxy-2-methylphenyl)-butan, 1,1-Bis-(5-tert-butyl-4-hydroxy-2-methylphenyl)-3-n-dodecylmercaptobutan, Ethylenglycol-bis-[3,3-bis-(3'-tert-butyl-4'-hydroxyphenyl)-butyrat], Bis-(3-tert-butyl-4-hydroxy-5-methyl-phenyl)-dicyclopentadien, Bis-[2-(3'-tert-butyl-2'-hydroxy-5'methyl-benzyl)-6-tert-butyl-4-methyl-phenyl]-terephthalat, 1,1-Bis-(3,5-dimethyl-2-hydroxyphenyl)-butan, 2,2-Bis-(3,5-di-tert-butyl-4-hydroxyphenyl)-propan, 2,2-Bis-(5-tert-butyl-4-hydroxy-2-methylphenyl)-4-n-dodecylmercaptobutan, 1,1,5,5-Tetra-(5-tert-butyl-4-hydroxy-2-methylphenyl)-pentan.

1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tris-(3,5-di-tert-butyl-4-hydroxybenzyl)-amin, Bis-(4-tert-butyl-3-hydroxy-2,6-dimethylbenzyl)-di-thioterephthalat, Bis-(3,5-di-tert-butyl-4-hydroxybenzyl)-sulfid, Isooctyl-3,5-di-tert-butyl-4-hydroxybenzyl-mercaptoacetat.

1.8. Hydroxybenzylierte Malonate, z.B. Dioctadecyl-2,2-bis-(3,5-di-tert-butyl-2-hydroxybenzyl)-malonat, Dioctadecyl-2-(3-tert-butyl-4-hydroxy-5-methylbenzyl)-malonat, Di-dodecylmercaptoethyl-2,2-bis-(3,5-di-tert-butyl-4-hydroxybenzyl)-malonat, Di-[4-(1,1,3,3-tetramethylbutyl)-phenyl]-2,2-bis-(3,5-di-tert-butyl-4-hydroxybenzyl)-malonat.

1.9. Hydroxybenzyl-Aromaten, z.B. 1,3,5-Tris-(3,5-di-tert-butyl-4-hydroxybenzyl)-2,4,6-trimethylbenzol, 1,4-Bis-(3,5-di-tert-butyl-4-hydroxybenzyl)-2,3,5,6-tetramethylbenzol, 2,4,6-Tris-(3,5-di-tert-butyl-4-hydroxybenzyl)-phenol.

1.10. Triazinverbindungen, z.B. 2,4-Bis-octylmercapto-6-(3,5-di-tert-butyl-4-hydroxy-anilino)-1,3,5-triazin, 2-Octylmercapto-4,6-bis-(3,5-di-tert-butyl-4-hydroxyanilino)-1,3,5-triazin, 2-Octylmercapto-4,6-bis-(3,5-di-tert-butyl-4-hydroxyphenoxy)-1,3,5-triazin, 2,4,6-Tris-(3,5-di-tert-butyl-4-hydroxyphenoxy)-1,2,3-triazin, 1,3,5-Tris-(3,5-di-tertbutyl-4-hydroxybenzyl)-isocyanurat, 1,3,5-Tris-(4-tert-butyl-3-hydroxy-2,6-dimethylbenzyl)-isocyanurat, 2,4,6-Tris-(3,5-di-tert-butyl-4-hydroxyphenylethyl)-1,3,5-triazin, 1,3,5-Tris-(3,5-di-tert-butyl-4-hydroxyphenylpropionyl)-hexahydro-1,3,5-triazin, 1,3,5-Tris-(3,5-dicyclohexyl-4-hydroxybenzyl)-isocyanurat.

1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.

1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.

1.13. Ester der β-(3,5-Di-tert-butyl-4-hydroxyphenyl-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxyethyl)-isocyanurat, N, N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.14. Ester der β-(5-tert-Butyl-4-hydroxy-3-methylphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Tri-methylhexandiol, Trimethylolpropan, 4-Hydroxymethyl-1-phospha-2,6,7-trioxabicyclo-[2.2.2]-octan.

1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris-(hydroxy)ethyl-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.

1.17. Amide der β-(3,5-Di-tert-butyl-4-hydroxyphenyl)-propionsäure, wie z.B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

### 2. UV-Absorber und Lichtschutzmittel

2.1.2-(2'-Hydroxyphenyl)-benzotriazole, wie z.B. 2-(2'-Hydroxy-5'-methylphenyl)-benzotriazol, 2-(3',5'-Di-tertbutyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-henzotriazol, 2-(3',5'-Di-tert-butyl-2'-hydroxyphenyl)-5-chlor-benzotriazol, 2-(3'-tert-Butyl- 2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis-(α,α-dimethylbenzyl)-2'-hydroxyphenyl)-benzotriazol, Mischung aus 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)phenyl)-benzotriazol, 2-(3'-tert-Butyl-5'-[2-(2-ethylhexyloxy)carbonylethyl]-2'-hydroxyphenyl)-benzotriazol, 2-(3'-Dodecyl-2'-hydroxy-5'-methylphenyl)-benzotriazol, und 2-(3'-tert-Butyl-2'-hydroxy-5'-(2-isooctyloxycarbonylethyl)phenyl-benzotriazol, 2,2'-Methylen-bis[4-(1,1, 3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 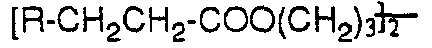 mit R = 3'-tert-Butyl-4'-hydroxy-5'-2H-benzotriazol-2-yl-phenyl.

2.2.2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.

2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Ditert-butyl-4-hydroxybenzoesäure-octadecylester, 3,5-Di-tert-butyl-4-hydroxybenzoesäure-2-methyl-4,6-di-tert-butylphenylester.

2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw. -butylester, α-Carbomethoxy-p-methoxyzimtsäure-methylester, N-(β-Carbomethoxy-β-cyanovinyl)-2-methyl-indolin.

2.5. Nickelverbindungen, wie z.B. Nickelkomplexe des 2,2'-Thio-bis-[4,(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.

2.6. Sterisch gehinderte Amine, wiez.B. Bis-(2,2,6,6-tetramethyl-piperidyl)-sebacat, Bis-(2,2,6,6-tetramethylpiperidyl)-succinat, Bis-(1,2,2,6,6-pentamethylpiperidyl)-sebacat, n-Butyl-3,5-di-tert-butyl-4-hydroxybenzyl-malonsäure-bis(1,2, 2,6,6-pentamethylpiperidyl)-ester, Kondensationsprodukt aus 1-Hydroxyethyl-2,2,6,6-tetramethyl-4-hydroxypiperidin und Bernsteinsäure, Tris-(2,2,6,6-tetramethyl- 4-piperidyl)-nitrilotriacetat, Tetrakis-(2,2,6,6-tetramethyl-4-piperidyl)-1,2,3,4-butantetraoat, 1,1'-(1,2-Ethandiyl)bis-(3,3,5,5-tetramethyl-piperazinon), 4-Benzoyl-2,2,6,6-letramethylpiperidin, 4-Stearyloxy-2,2,6,6-tetramethylpiperidin, Bis-(1,2,2,6,6-pentamathylpiparidyl)-2-n-butyl-2-(2-hydroxy-3,5-di-tert-butylbenzyl)-malonat, 3-n-Octyl-7,7,9,9-tetramethyl-1,3,8-triazaspiro[4.5]decan-2,4-dion, Bis-(1-octyloxy-2,2,6,6-tetramethylpiperidyl)-sebacat, Bis-(1-octyloxy-2,2,6,6-tetramethylpiperidyl)-succinat, Kondensationsprodukt aus 2-Chlor-4,6-di-(4-n-butylamino-2,2,6,6-tetramethylpiperidyl)-1,3,5-triazin und 1,2-Bis-(3-aminopropylamino) äthan, Kondensationsprodukt aus 2-Chlor-4,6-di-(4-n-butylamino-1,2,2,6,6-pentamethylpiperidyl)-1,3,5-triazin und 1,2-Bis-(3-amino-propylamino)-äthan, 8-Acetyl-3-dodecyl-7,7,9,9-tetramethyl-1,3,8-triazaspiro-[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion.

2.7. Oxalsäurediamide, wie z.B. 4,4'-Di-octyloxy-oxanilid, 2,2'-Diethoxy-oxanilid, 2,2'-Di-octyloxy-5,5'-di-tertbutyl-oxanilid, 2,2'-Di-dodecyloxy-5,5'di-tert-butyl-oxanilid, 2-Ethoxy-2'-ethyl-oxanilid, N,N'-Bis-(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o- und p-Methoxy- sowie von o- und p-Ethoxy-di-substituierten Oxaniliden.

2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis-(2,4-dimethylphenyl)1,3,5-triazin, 2-(2,4-Dihydroxyphenyl)-4,6-bis(2,4-dimethylphenyl)-1,3,5-triazin, 2,4-Bis-(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-[2-hydroxy-4-(2-hydroxy-3-butyloxy-propyloxy)phenyl]-4,6-bis(2,4-dimethylphenyl)-1,3,5-triazin, 2-[2-hydroxy-4-(2-hydroxy-3-octyloxy-propyloxy)phenyl]-4,6-bis(2,4-dimethylphenyl)-1,3,5-triazin.

3. Metalldesaktivatoren, wie z.B. N,N'-Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino-1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

4. Phosphite und Phosphonite, wie z.B. Triphenylphosphit, Diphenylalkylphosphite, Phenyldialkylphosphite, Tris-(nonylphenyl)-phosphit, Trilaurylphosphit, Trioctadecylphosphit, Distearyl-pentaerythritdiphosphit, Tris-(2,4-ditert-butylphenyl)-phosphit, Diisodecylpentaerythrit-diphosphit, Bis-(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis-(2,4-ditert-butyl-6-methylphenyl)-pentaerythritdiphosphit, Bis-(2,4,6-tri-tert-butylphenyl)-pentaerythritdiphosphit, Tristearylsorbit-triphosphit, Tetrakis-(2,4-di-tert-butylphenyl)-4,4'-biphenylen-diphosphonit, 6-Isooctyloxy-2,4,8,10-tetra-tert-butyl-12H-dibenz[d,g]-1,3,2-dioxaphosphocin, 6-Fluor-2,4,8,10-tetra-tert-butyl-12-methyl-di-benz[d,g]-1,3,2-dioxaphosphocin, Bis-(2,4-di-tert-butyl-6-methylphenyl)-methylphosphit, Bis-(2,4-di-tert-butyl-6-methylphenyl)-ethylphosphit.

5. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyldithiocarbamat, Dioctadecyldisulfid, Pentaerythrit-tetrakis-(β-dodecylmercapto)-propionat.

6. Polyamidstabilisatoren, wie z.B. Kupfersalze in Kombination mit Jodiden und/oder Phosphorverbindungen und Salze des zweiwertigen Mangans.

7. Basische Co-Stabilisatoren, wie z.B. Melamin, Polyvinylpyrrolidon, Dicyandiamid, Tri-allylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

8. Nukleierungsmittel, wie z.B. 4-tert-Butylbenzoesäure, Adipinsäure, Diphenylessigsäure.

9. Füllstoffe und Verstärkungsmittel, wie z.B. Calciumcarbonat, Silikate, Glasfasern, Asbest, Talk, Kaolin, Glimmer, Bariumsulfat, Metalloxide und -hydroxide, Ruß, Graphit.

10. Sonstige Zusätze, wie z.B. Weichmacher, Gleitmittel, Emulgatoren, Pigmente, Optische Aufheller, Flammschutzmittel, Antistatika, Treibmittel.

11. Benzofuranone bzw. Indolinone, wie z.B. in US-A-4 325 863, US-A-4 338 244, US-A-5 175 312, US-A-5 216 052, US-A-5 252 643, DE-A-4 316 611, DE-A-4 316 622, DE-A-4 316 876, EP-A-0 589 839 oder EP-A-0 591 102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)phenyl]-benzofuran-2-on, 3,3'-Bis-[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tert-butyl-benzofuran-2-on.

Das Gewichtsverhältnis von erfindungsgemässem Stabilisatorgemisch zu den herkömmlichen Additiven kann beispielsweise 1:0,5 bis 1:5 betragen.

Ein weiterer Gegenstand der Erfindung ist die Verwendung des erfindungsgemässen Stabilisatorgemisches zum Stabilisieren von organischem Material gegen oxidativen, thermischen oder lichtinduzierten Abbau.

Die mit dem erfindungsgemässem Stabilisatorsystem stabilisierten organischen Materialien zeichnen sich nicht nur durch eine wesentlich verbesserte Lichtbeständigkeit sondern auch durch eine ausserordentlich verbesserte thermische Beständigkeit aus.

Die folgenden Beispiele erläutem die Erfindung weiter. Alle Prozentangaben beziehen sich auf das Gewicht, sofern nichts anderes angegeben ist.

In den folgenden Beispielen 1-4 verwendete Stabilisatoren:

### Verbindung A-1:

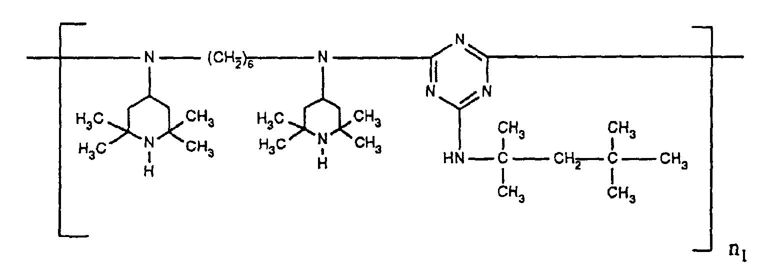

Der Mittelwert von n₁ beträgt 4,5.

### Verbindung A-2:

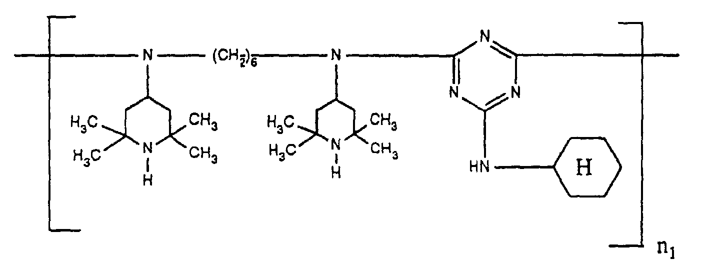

Der Mittelwert von n₁ beträgt 5,1.

### Verbindung B:

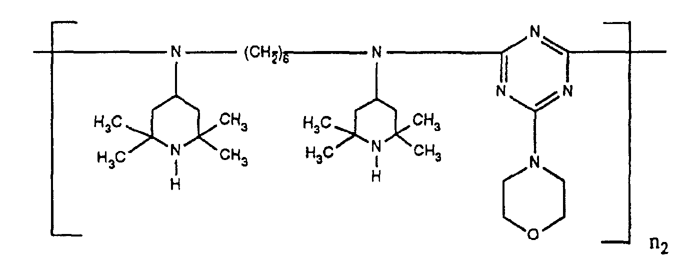

Der Mittelwert von n₂ beträgt 3,5.

### Verbindung D:

Ein Gemisch der Verbindungen Va und Vb, 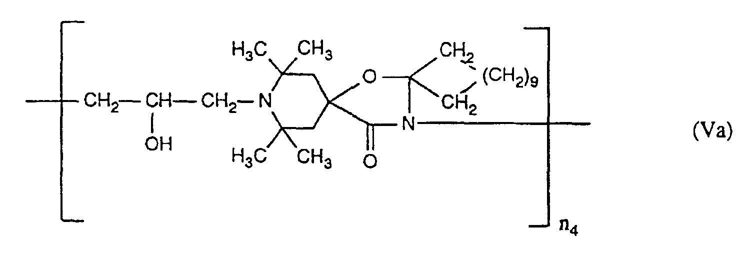 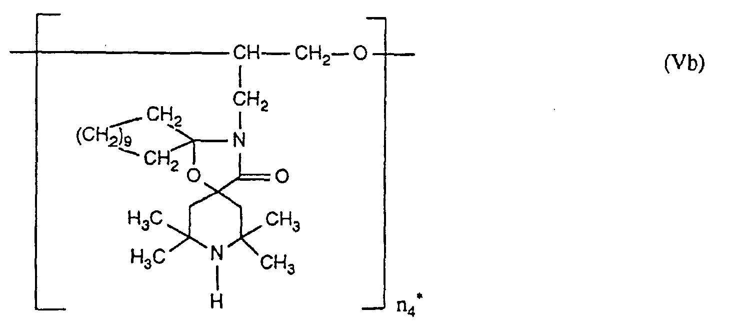 worin der Mittelwert von n₄ ca. 3,9 bzw. von n₄* ca. 4,2 beträgt und das Verhältnis von (Va) zu (Vb) ca. 4:1 ist.

### Beispiel 1: Lichtschutzwirkung in Polypropylenfasern

1000 Teile unstabilisiertes Polypropylenpulver (Schmelzindex: ca. 15 g/10 min; gemessen bei 230°C und 2,16 kg) werden in einem Schnellmischer mit 0,5 Teilen Calcium-3,5-di-tert-butyl-4-hydroxybenzyl-monoethylphosphonat, 0,5 Teilen Tris(2,4-di-tert-butylphenyl)phosphit, 2,5 Teilen Titandioxid, 1 Teil Ca-Stearat und 6 Teilen der in Tabelle 1 angegebenen Stabilisatoren gemischt und anschliessend in einem Extruder bei 220°C extrudiert und granuliert. Das erhaltene Granulat wird in einer Labor-Schnleizspinrianlage bei einer maximalen Temperatur von 270°C und einer Geschwindigkeit von 600 m/min zu einem 12,1 Dezitex Multifilament versponnen. Dieses wird mit einer Streckzwirnmaschine verstreckt und gezwirnt. Das Streckverhältnis ist 1:3,2, so dass schliesslich Multifilamente von 3,9 Dezitex erhalten werden. Diese Multifilamente werden auf weissem Karton montiert, 20 Minuten im Ofen bei 120°C behandelt (Simulation des "Tentering") und anschliessend im Xenotest 1200 belichtet.

Als Mass der Schutzwirkung gilt die Belichtungszeit bis 50 % Reissfestigkeitsverlust. Die Ergebnisse sind in Tabelle 1 zusammengefasst.

**Tabelle 1:**

| Lichtschutzwirkung in Polypropylen-Multifilament (3,9 Dezitex) | |
|---|---|
| Stabilisator | Stunden Xenotest 1200 bis zum Erreichen von 50 % Restreissfestigkeit |
| ohne | 270 |
| 0,6 % Verbindung A-1 | 4050 |
| 0,6 % Verbindung B | 3600 |
| 0,3 % Verbindung A-1 und 0,3 % Verbindung B | 4350 |

### Beispiel 2: Lichtschutzwirkung in Polypropylenfasern

1000 Teile unstabilisiertes Polypropylenpulver (Schmelzindex: ca. 15 g/10 min; gemessen bei 230°C und 2, 16 kg) werden in einem Schnellmischer mit 0,5 Teilen Calcium-3,5-ditert-butyl-4-hydroxybenzyl-monoethylphosphonat, 0,5 Teilen Tris-(2,4-di-tert-butylphenyl)-phosphit, 2,5 Teilen Titandioxid, 1 Teil Ca-Stearat und den in Tabelle 2 angegebenen Stabilisatoren gemischt und anschliessend in einem Extruder bei 220°C extrudiert und granuliert. Das erhaltene Granulat wird in einer Labor-Schmelzspinnanlage bei einer maximalen Temperatur von 270°C und einer Geschwindigkeit von 600 m/min zu einem 12,1 Dezitex Multifilament versponnen. Dieses wird mit einer Streckzwirnmaschine verstreckt und gezwirnt. Das Streckverhältnis ist 1:3,2, so dass schliesslich Multifilamente von 3,9 Dezitex erhalten werden. Diese Multifilamente werden auf weissem Karton montiert und anschliessend im WEATHER-OMETER Ci 65 belichtet.

Als Mass der Schutzwirkung gilt die Belichtungszeit bis 50 % Reissfestigkeitsverlust. Die Ergebnisse sind in Tabelle 2 zusammengefasst.

**Tabelle 2:**

| Lichtschutzwirkung in Polypropylen-Multifilament (3,9 Dezitex) | |
|---|---|
| Stabilisator | Stunden Weather-Ometer Ci 65 bis zum Erreichen von 50 % Restreissfestigkeit |
| ohne | 300 |
| 0,3 % Verbindung A-1 | 3500 |
| 0,3 % Verbindung D | 3175 |
| 0,15 % Verbindung A-1 und 0,15 % Verbindung D | 3950 |

### Beispiel 3: Lichtschutzwirkung in Polypropylen-Blockcopolymer-Folien

100 Teile Polypropylen-Blockcopolymer-Pulver werden mit 0,05 Teilen Pentaerythrityltetrakis-[3-(3,5-di-tertbutyl-4-hydroxyphenyl)-propionat, 0,10 Teilen Tris-(2,4-di-tert-butylphenyl)-phosphit, 0,1 Teilen Ca-Stearat und den in Tabelle 3 angegebenen Stabilisatoren im Brabenderplastographen bei 200°C während 10 Minuten homogenisiert. Die so erhaltene Masse wird möglichst rasch dem Kneter entnommen und in einer Kniehebelpresse zu einer 2-3 mm dicken Platte gepresst. Ein Teil des erhaltenen Rohpresslings wird ausgeschnitten und zwischen zwei Hochglanz-Hartaluminiumfolien mit einer hydraulischen Laborpresse während 6 Minuten bei 260°C zu einer 0,5 mm dicken Folie gepresst, die unverzüglich in einer wassergekühlten Presse abgekühlt wird. Aus dieser 0,5 mm Folie werden nun Abschnitte von je 60 mm x 25 mm gestanzt und in einem WEATHER-OMETER Ci 65 (Schwarztafeltemperatur 63 ± 2°C, keine Beregnung) belichtet. In regelmässigen Zeitabständen werden diese Prüflinge aus dem Belichtungsapparat entnommen und in einem IR-Spektrophotometer auf ihren Carbonylgehalt geprüft. Die Zunahme der Carbonylextinktion bei der Belichtung ist ein Mass für den photooxidativen Abbau des Polymeren und ist erfahrungsgemäss mit einem Abfall der mechanischen Eigenschaften verbunden. Die Ergebnisse sind in Tabelle 3 aufgeführt.

**Tabelle 3:**

| Lichtschutzwirkung in Polypropylen-Blockcopolymer-Folien | |
|---|---|
| Stabilisator | Carbonylextinktion nach 1314 Stunden Belichtung |
| ohne | 0,100 (nach 90 Stunden) |
| 0,20 % Verbindung A-1 | 0,059 |
| 0,20 % Verbindung A-2 | 0,100 (nach 1260 Stunden) |
| 0,20 % Verbindung D | 0,054 |
| 0,10 % Verbindung D und 0,10 % Verbindung A-1 | 0,023 |
| 0,10 % Verbindung D und 0,10 % Verbindung B | 0,026 |
| 0,10 % Verbindung D und 0,10 % Verbindung A-2 | 0,020 |
| 0,10 % Verbindung A-1 und 0,10 % Verbindung A-2 | 0,051 |

Beispiel 4: Lichtschutzwirkunq in Folien aus Polyethylen niedriger Dichte (PE-LD) 100 Teile PE-LD-Pulver (Dichte = 0,918 g/cm³) werden mit 0,03 Teilen Octadecyl-3-(3,5-di-tert-butyl-4-hydroxyphenyl)-propionat und den in Tabelle 4 angegebenen Stabilisatoren im Brabenderplastographen bei 180°C während 10 Minuten homogenisiert. Die so erhaltene Masse wird möglichst rasch dem Kneter entnommen und in einer Presse zu einer 2-3 mm dicken Platte gepresst. Ein Teil des erhaltenen Rohpresslings wird ausgeschnitten und zwischen zwei Hochglanz-Hartaluminiumfolien mit einer hydraulischen Laborpresse während 6 Minuten bei 170°C zu einer 0,2 mm dicken Folie gepresst, die unverzüglich in einer wassergekühlten Presse abgekühlt wird. Aus dieser 0,2 mm dicken Folie werden nun Abschnitte von je 60 mm x 25 mm gestanzt und während 24 Stunden in eine 0,1 N H₂SO₃ Lösung getaucht. Dies wird als Simulation des sauren Regens angesehen.

Anschliessend werden die Proben in einem WEATHER-OMETER Ci 65 (Schwarztafeltemperatur 63 ± 2°C, keine Beregnung) belichtet. In regelmässigen Zeitabständen werden diese Prüflinge aus dem Belichtungsapparat genommen und in einem IR-Spektrophotometer auf ihren Carbonylgehalt geprüft. Die Zunahme der Carbonylextinktion bei der Belichtung ist ein Mass für den photooxidativen Abbau des Polymeren und ist erfahrungsgemäss mit einem Abfall der mechanischen Eigenschaften verbunden. Die Ergebnisse sind in Tabelle 4 aufgeführt.

**Tabelle 4:**

| Lichtschutzwirkung in Folien aus Polyethylen niedriger Dichte (PE-LD) | |
|---|---|
| Stabilisator | Carbonylextinktion nach 1981 Stunden Belichtung |
| ohne | 0,100 (nach 260 Stunden) |
| | |
| 0,15 % Verbindung A-1 | 0,045 |
| | |
| 0,15 % Verbindung B | 0,027 |
| | |
| 0,15 % Verbindung D | 0,016 |
| | |
| 0,075 % Verbindung A-1 und 0,075 % Verbindung B | 0,010 |
| | |
| 0,075 % Verbindung D und 0,075 % Verbindung B | 0,009 |

## Patentansprüche

1. Synergistisches Stabilisatorgemisch
enthaltend mindestens eine Verbindung aus der Komponente a) und mindestens eine Verbindung aus der Komponente b) oder
enthaltend mindestens eine Verbindung aus der Komponente a) oder b) und mindestens eine Verbindung aus der Komponente d) oder
enthaltend mindestens zwei Verbindungen aus der Komponente a), wobei
die Komponente a) mindestens eine Verbindung der Formel I ist, 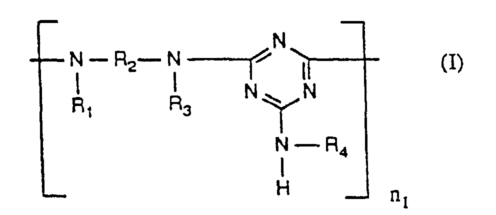 worin R₁, R₃ und R₄ unabhängig voneinander C₁-C₁₂-Alkyl, C₅-C₁₂-Cycloalkyl, durch C₁-C₄-Alkyl substituiertes C₅-C₁₂-Cycloalkyl, Phenyl, durch -OH und/oder C₁-C₁₀-Alkyl substituiertes Phenyl, C₇-C₉-Phenylalkyl, am Phenylrest durch -OH und/oder C₁-C₁₀-Alkyl substituiertes C₇-C₉-Phenylalkyl oder eine Gruppe der Formel II bedeuten, 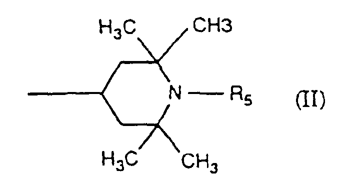 wobei R₅ Wasserstoff, C₁-C₈-Alkyl, O⁻, -CH₂CN, C₃-C₆-Alkenyl, C₇-C₉-Phenylalkyl, am Phenylrest durch C₁-C₄-Alkyl substituiertes C₇-C₉-Phenylalkyl oder C₁-C₈-Acyl ist, und
R₁ und R₃ zusätzlich unabhängig voneinander Wasserstoff darstellen,
R₂ C₂-C₁₈-Alkylen, C₅-C₇-Cycloalkylen oder C₁-C₄-Alkylendi(C₅-C₇-cycloalkylen) ist oder
die Reste R₁, R₂ und R₃ zusammen mit den Stickstoffatomen, an die sie gebunden sind,
einen 5- bis 10-gliedrigen heterocyclischen Ring bilden,
n₁ eine Zahl von 2 bis 50 ist und mindestens einer der Reste R₁, R₃ und R₄ eine Gruppe der Formel II darstellt;
die Komponente b) mindestens eine Verbindung der Formel III ist, 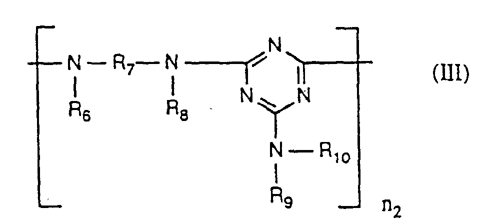 worin R₆ und R₈ unabhängig voneinander Wasserstoff, C₁-C₁₂-Alkyl, C₅-C₁₂-Cycloalkyl, durch C₁-C₄-Alkyl substituiertes C₅-C₁₂-Cycloalkyl, Phenyl, durch -OH und/oder
C₁-C₁₀-Alkyl substituiertes Phenyl, C₇-C₉-Phenylalkyl, am Phenylrest durch -OH und/oder C₁-C₁₀-Alkyl substituiertes C₇-C₉-Phenylalkyl oder eine Gruppe der Formel II bedeuten,
R₇ C₂-C₁₈-Alkylen, C₅-C₇-Cycloalkylen oder C₁-C₄-Alkylendi(C₅-C₇-cycloalkylen) ist oder
die Reste R_{6,} R₇ und R₈ zusammen mit den Stickstoffatomen, an die sie gebunden sind, einen 5- bis 10-gliedrigen heterocyclischen Ring bilden,
R₉ und R₁₀ unabhängig voneinander C₁-C₁₂-Alkyl, C₅-C₁₂-Cycloalkyl, durch C₁-C₄-Alkyl substituiertes C₅-C₁₂-Cycloalkyl, Phenyl, durch -OH und/oder C₁-C₁₀-Alkyl substituiertes Phenyl, C₇-C₉-Phenylalkyl, am Phenylrest durch -OH und/oder C₁-C₁₀-Alkyl substituiertes C₇-C₉-Phenylalkyl oder eine Gruppe der Formel II darstellen oder
R₉ und R₁₀ zusammen mit dem Stickstoffatom, an das sie gebunden sind, einen 5- bis 10-gliedrigen heterocyclischen Ring bilden,
n₂ eine Zahl von 2 bis 50 ist und mindestens einer der Reste R₆, R₈, R₉ und R₁₀ eine Gruppe der Formel (II) darstellt;
die Komponente d) mindestens eine Verbindung der Formeln Va und Vb ist, 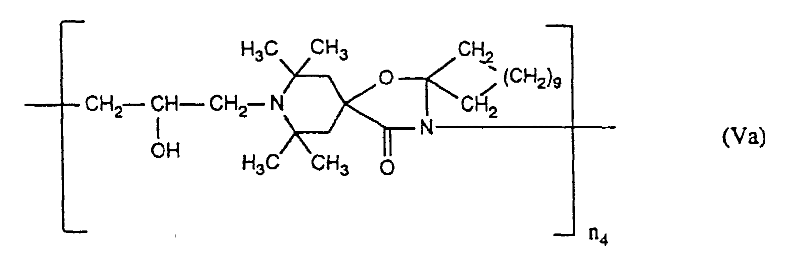 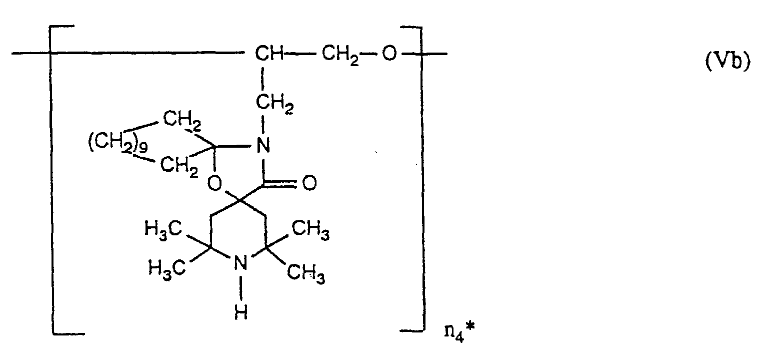 worin n₄ und n₄* unabhängig voneinander eine Zahl von 2 bis 50 sind;
mit der Bedingung, dass das Stabilisatorgemisch enthaltend mindestens eine Verbindung der Formel I, mindestens eine Verbindung der Formel III und mindestens eine Verbindung der Formel VI, 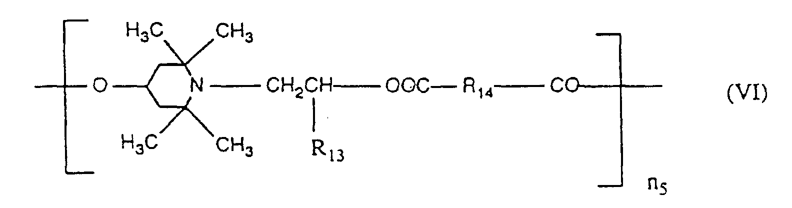 worin R₁₃ Wasserstoff oder Methyl bedeutet, R₁₄ eine direkte Bindung oder C₁-C₁₀-Alkylen ist und n₅ eine Zahl von 2 bis 100 darstellt ausgeschlossen ist.

2. Stabilisatorgemisch gemäss Anspruch 1, worin R₅ Wasserstoff, C₁-C₄-Alkyl, Allyl, Benzyl oder Acetyl ist.

3. Stabilisatorgemisch gemäss Anspruch 1, worin R₅ Wasserstoff oder Methyl ist.

4. Stabilisatorgemisch gemäss Anspruch 1, worin
R₁, R₃ und R₄ unabhängig voneinander C₁-C₁₀-Alkyl, C₅-C₇-Cycloalkyl, durch C₁-C₄-Alkyl substituiertes C₅-C₇-Cycloalkyl, Phenyl, durch OH und/oder C₁-C₄-Alkyl substituiertes Phenyl, C₇-C₉-Phenylalkyl, am Phenylrest durch -OH und/oder C₁-C₄-Alkyl substituiertes C₇-C₉-Phenylalkyl oder eine Gruppe der Formel II bedeuten und
R₁ und R₃ zusätzlich unabhängig voneinander Wasserstoff darstellen,
R₂ C₂-C₁₀-Alkylen, C₅-C₇-Cycloalkylen oder C₁-C₄-Alkylendi(C₅-C₇-cycloalkylen) ist oder
die Reste R₁, R₂ und R₃ zusammen mit den Stickstoffatomen, an die sie gebunden sind,
einen 5- bis 7-gliedrigen heterocyclischen Ring bilden und
n₁ eine Zahl von 2 bis 40 ist;
R₆ und R₈ unabhängig voneinander Wasserstoff, C₁-C₁₀-Alkyl, C₅-C₇-Cycloalkyl, durch C₁-C₄-Alkyl substituiertes C₅-C₇-cycloalkyl, Phenyl, durch OH und/oder C₁-C₄-Alkyl substituiertes Phenyl, C₇-C₉-Phenylalkyl, am Phenylrest durch -OH und/oder C₁-C₄-Alkyl substituiertes C₇-C₉-Phenylalkyl oder eine Gruppe der Formel II bedeuten,
R₇ C₂-C₁₀-Alkylen, C₅-C₇-Cycloalkylen oder C₁-C₄-Alkylendi(C₅-C₇-Cycloalkylen) ist oder
die Reste R₆, R₇ und R₈ zusammen mit den Stickstoffatomen, an die sie gebunden sind,
einen 5- bis 7-gliedrigen heterocyclischen Ring bilden,
R₉ und R₁₀ unabhängig voneinander C₁-C₁₀-Alkyl, C₅-C₇-Cycloalkyl, durch C₁-C₄-Alkyl substituiertes C₅-C₇-Cycloalkyl, Phenyl, durch OH und/oder C₁-C₄-Alkyl substituiertes Phenyl, C₇-C₉-Phenylalkyl, am Phenylrest durch -OH und/oder C₁-C₄-Alkyl substituiertes C₇-C₉-Phenylalkyl oder eine Gruppe der Formel II bedeuten oder
R₉ und R₁₀ zusammen mit dem Stickstoffatom, an das sie gebunden sind, einen 5- bis 7-gliedrigen heterocyclischen Ring bilden und
n₂ eine Zahl von 2 bis 40 ist;
n₄ und n₄* unabhängig voneinander eine Zahl von 2 bis 40 sind.

5. Stabilisatorgemisch gemäss Anspruch 1, worin
R₁ und R₃ unabhängig voneinander Wasserstoff, C₁-C₈-Alkyl, C₅-C₇-Cycloalkyl, Phenyl, Benzyl oder eine Gruppe der Formel II bedeuten
R₂ C₂-C₈-Alkylen, Cyclohexylen oder Methylendi(cyclohexylen) ist,
R₄ C₁-C₁₀-Alkyl, C₅-C₇-Cyclcalkyl oder durch C₁-C₄-Alkyl substituiertes C₅-C₇-Cycloalkyl darstellt und
n₁ eine Zahl von 2 bis 25 ist;
R₆ und R₈ unabhängig voneinander Wasserstoff, C₁-C₈-Alkyl, C₅-C₇-Cycloalkyl, Phenyl, Benzyl oder eine Gruppe der Formel II bedeuten,
R₇ C₂-C₈-Alkylen, Cyclohexylen oder Mothylendi(cyclohexylen) ist,
R₉ und R₁₀ unabhängig voneinander C₁-C₈-Alkyl, C₅-C₇-Cycloalkyl, Phenyl, Benzyl oder eine Gruppe der Formel II sind oder
R₉ und R₁₀ zusammen mit dem Stickstoffatom, an das sie gebunden sind, 1-Pyrrolidyl, Piperidino, Morpholino, 1-Piperazinyl, 4-Methyl-1-piperazinyl, 1-Hexahydroazepinyl, 5 5,7-Trimethyl-1-homopiperazinyl oder 4,5,5,7-Tetramethyl-1-homopiperazinyl bedeuten und
n₂ eine Zahl von 2 bis 25 ist; und
n₄ und n₄* unabhängig voneinander eine Zahl von 2 bis 25 sind.

6. Stabilisatorgemisch gemäss Anspruch 1, worin n₁, n₂, n₄ und n₄* unabhängig voneinander eine Zahl von 2 bis 20 bedeuten.

7. Stabilisatorgemisch gemäss Anspruch 1, worin
R₁ und R₃ unabhängig voneinander Wasserstoff, C₁-C₄-Alkyl oder eine Gruppe der Formel II bedeuten, worin
R₅ Wasserstoff oder Methyl ist,
R₂ C₂-C₆-Alkylen darstellt,
R₄ C₁-C₁₀-Alkyl oder Cyclohexyl ist und
n₁ eine Zahl von 2 bis 20 bedeutet;
R₆ und R₈ unabhängig voneinander Wasserstoff, C₁-C₄-Alkyl oder eine Gruppe der Formel II bedeuten, worin
R₅ Wasserstoff oder Methyl ist,
R₇ C₂-C₆-Alkylen ist,
R₉ und R₁₀ unabhängig voneinander C₁-C₈-Alkyl oder eine Gruppe der Formel II sind, worin R₅ die oben angegebene Bedeutung hat, oder
R₉ und R₁₀ zusammen mit dem Stickstoffatom, an das sie gebunden sind, Morpholino bilden und
n₂ eine Zahl von 2 bis 20 bedeutet; und
n₄ und n₄* unabhängig voneinander eine Zahl von 2 bis 20 sind.

8. Stabilisatorgemisch gemäss Anspruch 1, worin
die Verbindung der-Formel I 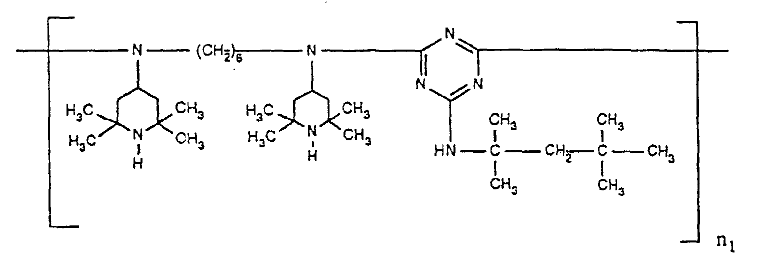 oder 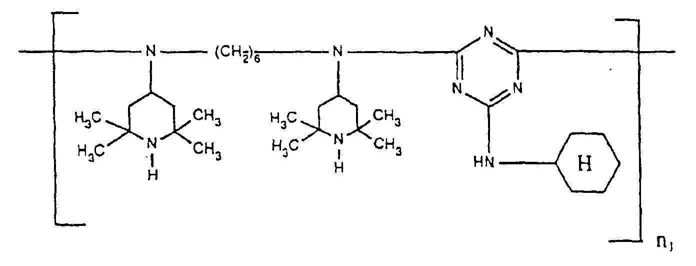 ist und die Verbindung der Formel III 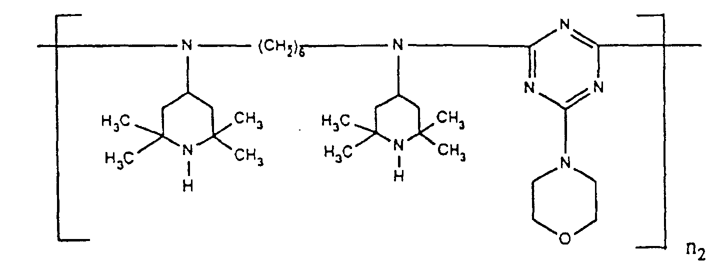 bedeutet und
n₁, n₂, n₄ und n₄* unabhängig voneinander eine Zahl von 2 bis 20 bedeuten.

9. Stabilisatorgemisch gemäss Anspruch 1, enthaltend die Verbindungen 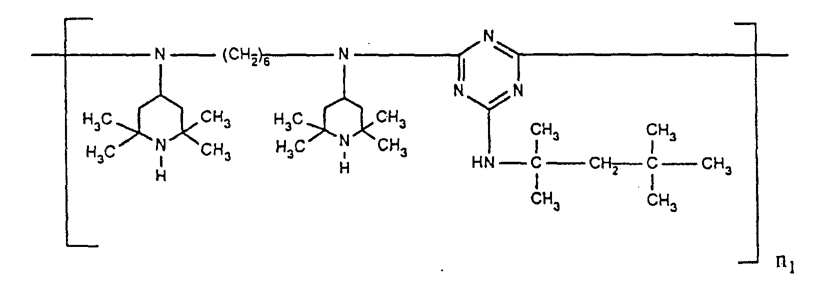 und 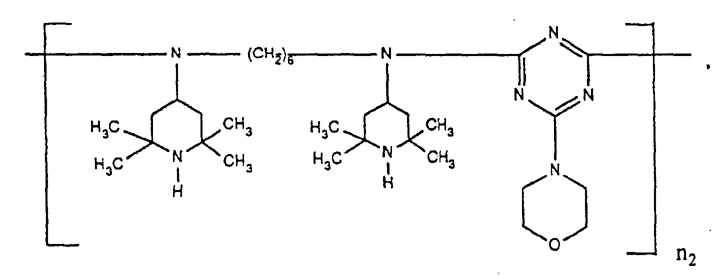 wobei n₁ und n₂ unabhängig voneinander eine Zahl von 2 bis 20 bedeuten.

10. Stabilisatorgemisch gemäss Anspruch 1, enthaltend ein Gemisch der Verbindungen Va und Vb, worin n₄ und n₄* unabhängig voneinander eine Zahl von 2 bis 20 sind, und die Verbindung 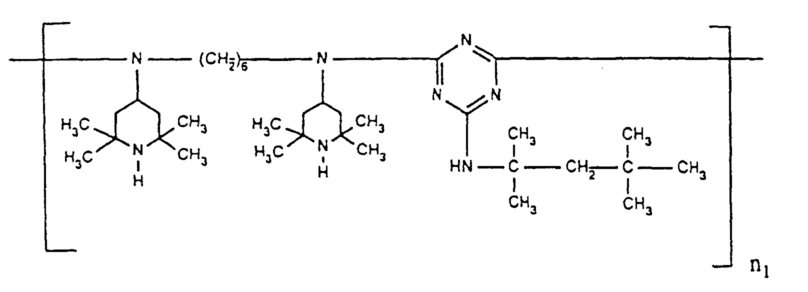 oder 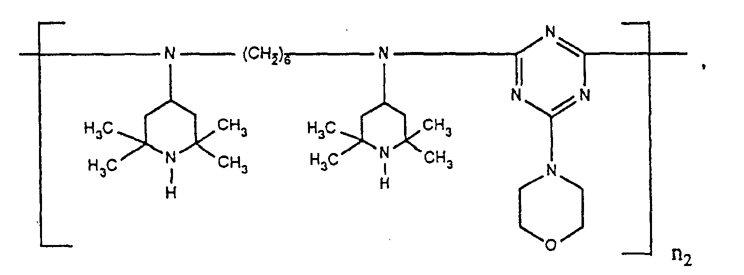 wobei n₁ und n₂ unabhängig voneinander eine Zahl von 2 bis 20 bedeuten.

11. Zusammensetzung enthaltend ein gegen oxidativen, thermischen oder lichtinduzierten Abbau empfindliches organisches Material und ein Stabilisatorgemisch gemäss Anspruch 1.

12. Zusammensetzung gemäss Anspruch 11, worin das organische Material ein Polyolefin ist.

13. Zusammensetzung gemäss Anspruch 11, worin das organische Material Polyethylen, Polypropylen oder ein Copolymer von Polyethylen oder Polypropylen ist.

14. Verwendung eines Stabilisatorgemisches gemäss Anspruch 1 zum Stabilisieren eines gegen oxidativen, thermischen oder lichtinduzierten Abbau empfindlichen organischen Materials.

## Claims

1. A synergistic stabiliser mixture comprising at least one compound of component a) and at least one compound of component b), or comprising at least one compound of component a) or b) and at least one compound of component d), or comprising at least two compounds of component a) wherein
component a) is at least one compound of formula I 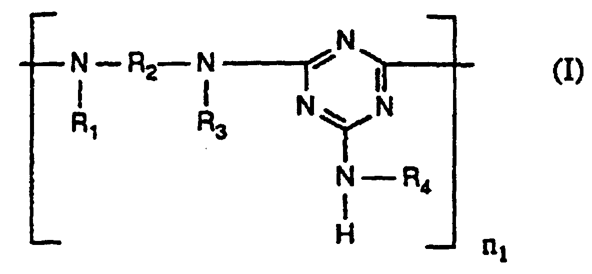 wherein R₁, R₃ and R₄ are each independently of one another C₁-C₁₂alkyl, C₅-C₁₂cycloalkyl, C₁-C₄alkyl-substituted C₅-C₁₂cycloalkyl, phenyl, phenyl substituted by -OR and/or C₁-C₁₀alkyl; C₇-C₉phenylalkyl, C₇-C₉phenylalkyl which is substituted in the phenyl nucleus by -OH and/or C₁-C₁₀alkyl; or a group of formula II 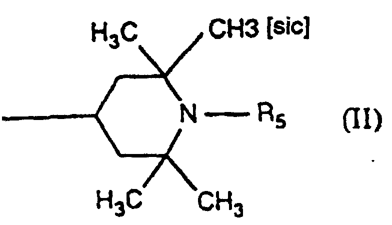 wherein R₅ is hydrogen, C₁-C₈alkyl, O, -CH₂CH, C₃-C₆alkenyl, C₇-C₉phenylalkyl, C₇-C₉phenylalkyl which is substituted in the phenyl nucleus by C₁-C₄alkyl; or C₁-C₈acyl, and
R₁ and R₃ are additionally each independently of the other hydrogen,
R₂ is C₂-C₁₈alkylene, C₅-C₇cycloalkylene or C₁-C₄alkylenedi(C₅-C₇cycloalkylene), or
R₁, R₂ and R₃, together with the nitrogen atoms to which they are attached, form a 5- to 10-membered heterocyclic ring,
n₁ is a number from 2 to 50 and at least one of R₁, R₃ and R₄ is a group of formula II;
component b) is at least one compound of formula III 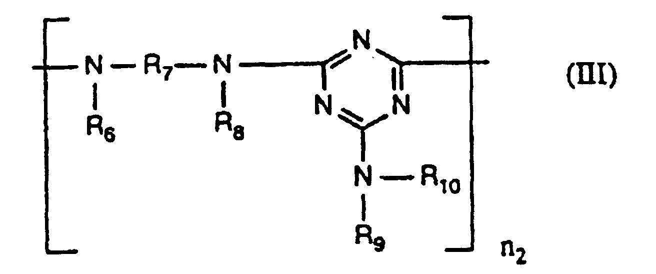 wherein R₆ and R₈ are each independently of the other hydrogen, C₁-C₁₂alkyl, C₅-C₁₂cycloalkyl, C₁-C₄alkyl-substituted C₅-C₁₂cycloalkyl, phenyl, phenyl substituted by -OH and/or C₁-C₁₀alkyl; C₇-C₉phenylalkyl, C₇-C₉phenylalkyl which is substituted in the phenyl nucleus by -OH and/or C₁-C₁₀alkyl; or a group of formula II,
R₇ is C₂-C₁₈alkylene, C₅-C₇cycloalkylene or C₁-C₄alkylenedi(C₅-C₇cycloalkylene), or
R₆, R₇ and R₈ together with the nitrogen atoms to which they are attached form a 5- to 10-membered heterocyclic ring,
R₉ and R₁₀ are each independently of the other C₁-C₁₂alkyl, C₅-C₁₂cycloalkyl, C₁-C₄alkyl-substituted C₅-C₁₂cycloalkyl, phenyl, phenyl substituted by -OH and/or C₁-C₁₀alkyl; C₇-C₉phenylalkyl, C₇-C₉phenylalkyl which is substituted in the phenyl nucleus by -OH and/or C₁-C₁₀alkyl; or a group of formula II, or
R₉ and R₁₀, together with the nitrogen atom to which they are attached, form a 5- to 10-membered heterocyclic ring,
n₂ is a number from 2 to 50 and at least one of R₆, R₈, R₉ and R₁₀ is a group of formula (II);
component d) is at least one compound of formulae Va and Vb 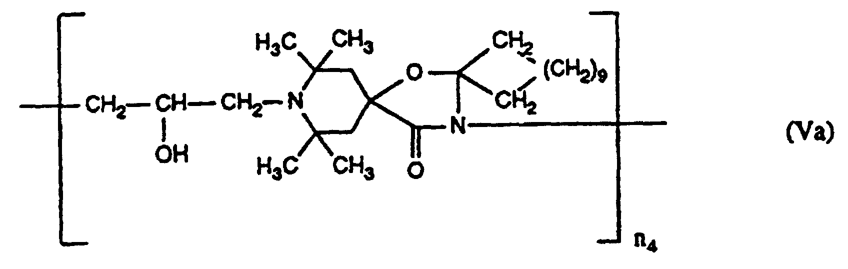 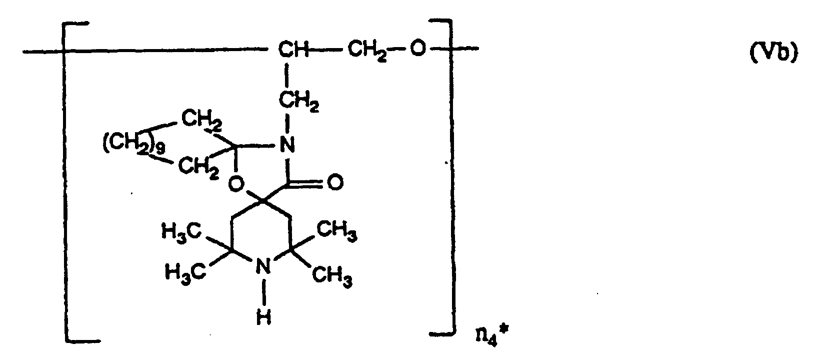 wherein n₄ and n₄* are each independently of the other a number from 2 to 50;
with the proviso that the stabiliser mixture comprising at least one compound of formula I, at least one compound of formula III and at least one compound of formula VI. 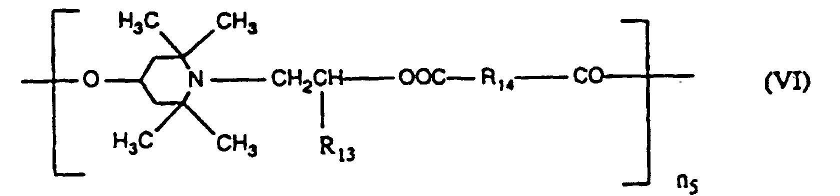 wherein R₁₃ is a hydrogen or methyl, R₁₄ is a direct bond or C₁-C₁₀alkylene and n₅ is a number from 2 to 100, is excluded.

2. A stabiliser mixture according to claim 1, wherein R₅ is hydrogen, C₁-C₄alkyl, allyl, benzyl or acetyl.

3. A stabiliser mixture according to claim 1, wherein R₅ is hydrogen or methyl.

4. A stabiliser mixture according to claim 1, wherein R₁, R₃ and R₄ are each independently of one another C₁-C₁₀alkyl, C₅-C₇cycloalkyl, C₁-C₄alkyl-substituted C₅-C₇cycloalkyl, phenyl, phenyl substituted by -OH and/or C₁-C₄alkyl; C₇-C₉phenylalkyl, C₇-C₉phenylalkyl substituted in the phenyl nucleus by -OH and/or C₁-C₄alkyl; or a group of formula II, and
R₁ and R₃ are additionally each independently of the other hydrogen,
R₂ is C₂-C₁₀alkylene, C₅-C₇cycloalkylene or C₁-C₄alkylenedi (C₅-C₇cycloalkylene), or R₁, R₂ and R₃, together with the nitrogen atoms to which they are attached, form a 5- to 7-membered heterocyclic ring, and
n₁ is a number from 2 to 40;
R₆ and R₈ are each independently of the other hydrogen, C₁-C₁₀alkyl, C₅-C₇cycloalkyl, C₁-C₄alkyl-substituted C₅-C₇cycloalkyl, phenyl, phenyl substituted by -OH and/or C₁-C₄alkyl; C₇-C₉phenylalkyl, C₇-C₉phenylalkyl substituted in the phenyl nucleus by -OH and/or C₁-C₄alkyl; or a group of formula II,
R₇ is C₂-C₁₀alkylene, C₅-C₇cycloalkylene or C₁-C₄alkylenedi (C₅-C₇cycloalkylene),
or R₆, R₇ and R₈, together with the nitrogen atoms to which they are attached, form a 5- to 7-membered heterocyclic ring,
R₉ and R₁₀ are each independently of the other C₁-C₁₀alkyl, C₅-C₇cycloalkyl, C₁-C₄alkyl-substituted C₅-C₇cycloalkyl, phenyl, phenyl substituted by -OH and/or C₁-C₄alkyl; C₇-C₉phenylalkyl, C₇-C₉phenylalkyl substituted in the phenyl nucleus by -OH and/or C₁-C₄alkyl; or a group of formula II, or
R₉ and R₁₀, together with the nitrogen atom to which they are attached, form a 5- to 7-membered heterocyclic ring, and
n₂ is a number from 2 to 40;
n₄ and n₄* are each independently of the other a number from 2 to 40.

5. A stabiliser mixture according to claim 1, wherein
R₁ and R₃ are each independently of the other hydrogen, C₁-C₈alkyl, C₅-C₇cycloalkyl, phenyl, benzyl or a group of formula II,
R₂ is a C₂-C₈alkylene, cyclohexylene or methylenedi(cyclohexylene),
R₄ is a C₁-C₁₀alkyl, C₅-C₇cycloalkyl, C₁-C₄alkyl-substituted C₅-C₇cycloalkyl, and
n₁ is a number from 2 to 25;
R₆ and R₈ are each independently of the other hydrogen, C₁-C₈alkyl, C₅-C₇cycloalkyl, phenyl, benzyl or a group of formula II,
R₇ is a C₂-C₈alkylene, cyclohexylene or methylenedi(cyclohexylene),
R₉ and R₁₀ are each independently of the other C₁₋C₈alkyl, C₅-C₇cycloalkyl, phenyl, benzyl or a group of formula II, or
R₉ and R₁₀, together with the nitrogen atom to which they are attached, are 1-pyrrolidyl, piperidino, morpholino, 1-piperazinyl, 4-methyl-1-piperazinyl, 1-hexahydroazepinyl, 5,5,7-trimethyl-1-homopiperazinyl or 4,5,5,7-tetramethyl-1-homopiperazinyl, and
n₂ is a number from 2 to 25; and
n₄ and n₄* are each independently of the other a number from 2 to 25.

6. A stabiliser mixture according to claim 1, wherein n₁, n₂, n₄ and n₄* are each independently of one another a number from 2 to 20.

7. A stabiliser mixture according to claim 1, wherein
R₁ and R₃ are each independently of the other hydrogen, C₁-C₄alkyl or a group of formula II, wherein
R₅ is hydrogen or methyl,
R₂ is C₂-C₆alkylene,
R₄ is C₁-C₁₀alkyl or cyclohexyl, and
n₁ is a number from 2 to 20;
R₆ and R₈ are each independently of the other hydrogen, C₁-C₄alkyl or a group of formula II, wherein
R₅ is hydrogen or methyl,
R₇ is C₂-C₆alkylene,
R₉ and R₁₀ are each independently of the other C₁-C₈alkyl or a group of formula II, wherein
R₅ has the meaning given above, or
R₉ and R₁₀, together with the nitrogen atom to which they are attached, are morpholino, and
n₂ is a number from 2 to 20; and
n₄ and n₄* are each independently of the other a number from 2 to 20.

8. A stabiliser mixture according to claim 1, wherein the compound of formula I is 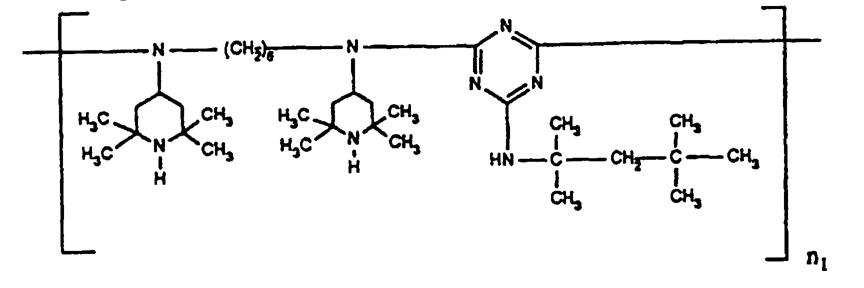 or 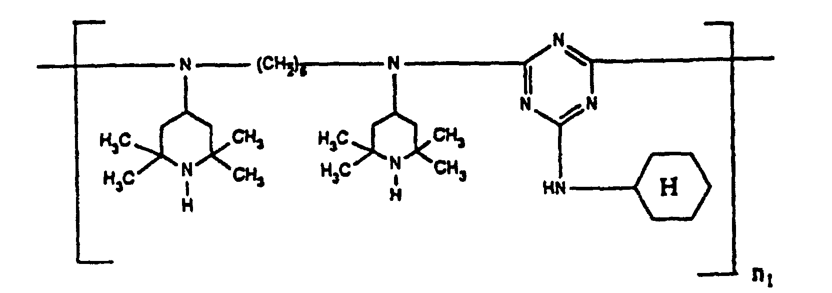 and the compound of formula III is 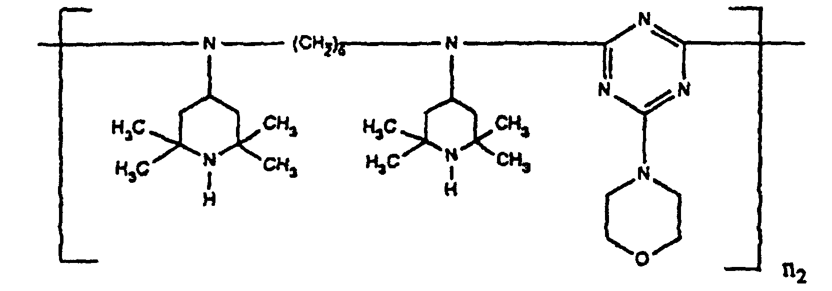 and
n₁, n₂, n₄ and n₄* are each independently of one another a number from 2 to 20.

9. A stabiliser mixture according to claim 1, comprising the compounds 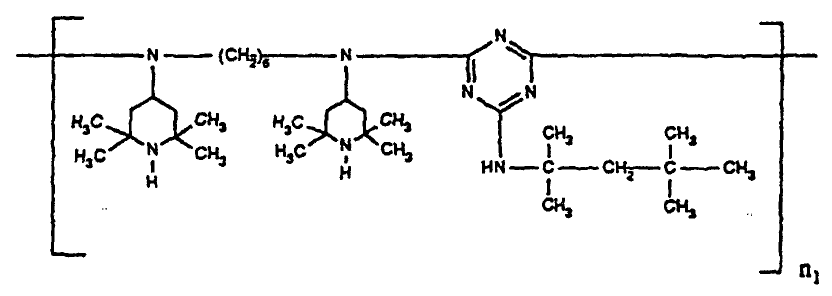 and 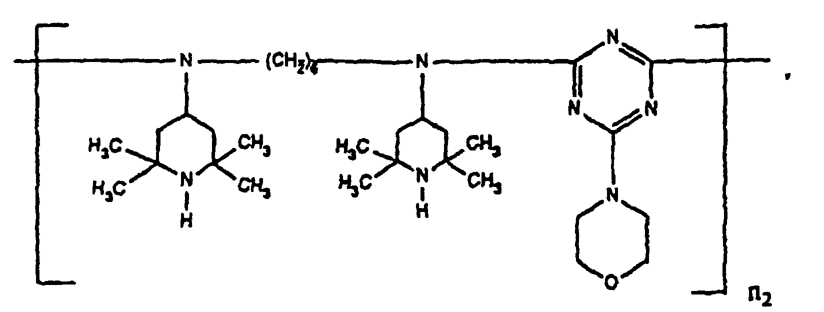 wherein n₁ and n₂ are each independently of the other a number from 2 to 20.

10. A stabiliser mixture according to claim 1, comprising a mixture of compounds Va and Vb, wherein n₄ and n₄* are each independently of the other a number from 2 to 20, and the compound 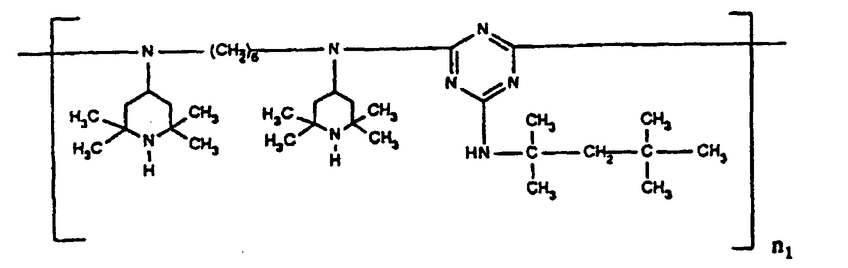 or 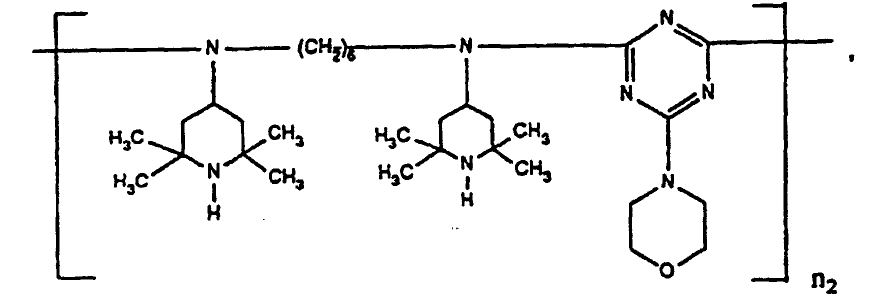 wherein n₁ and n₂ are each independently of the other a number from 2 to 20.

11. A composition comprising an organic material sensitive to oxidative, thermal or light-induced degradation and a stabiliser mixture according to claim 1.

12. A composition according to claim 11, wherein the organic material is a polyolefin.

13. A composition according to claim 11, wherein the organic material is polyethylene, polypropylene or a copolymer of polyethylene or polypropylene.

14. The use of a stabiliser mixture according to claim 1 for stabilising an organic material sensitive to oxidative, thermal or light-induced degradation.

## Revendications

1. Mélange synergétique de stabilisants contenant au moins un composé parmi les composants a) et au moins un composé parmi les composants b) ou contenant au moins un composé parmi les composants a) ou b) et au moins un composé parmi les composants d) ou contenant au moins deux composés parmi les composants a)
le composant a) est au moins un composé de formule I 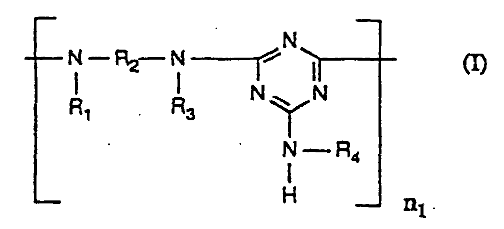 dans laquelle
R₁, R₃, et R₄ représentent indépendamment les uns des autres un groupe alkyle en C₁ à C₁₂, cycloalkyle en C₅ à C₁₂, cycloalkyle en C₅ à C₁₂ substitué par un groupe alkyle en C₁ à C₄, phényle, phényle substitué par un groupe -OH et/ou alkyle en C₁ à C₁₀, phénylalkyle en C₇ à C₉, phénylalkyle en C₇ à C₉ substitué sur le groupe phényle par un groupe -OH et/ou alkyle en C₁ à C₁₀ ou un groupe de formule II 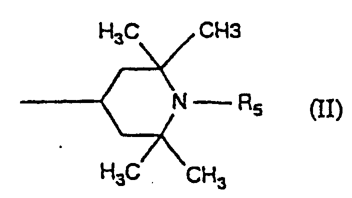 dans laquelle
R₅ représente un atome d'hydrogène, un groupe alkyle en C₁ à C₈, O^{•}, -CH₂CN, alcényle en C₃ à C₆, phénylalkyle en C₇ à C₉, phénylalkyle en C₇ à C₉ substitué sur le groupe phényle par un groupe alkyle en C₁ à C₄ ou acyle en C₁ à C₈,
et
les groupes R₁ et R₃ représentent indépendamment les uns des autres un atome d'hydrogène,
R₂ représente un groupe alkylène en en C₂ à C₁₈, cycloalkylène en C₅ à C₇ ou (alkylène en C₁ à C₄) di(cycloalkylène en C₅ à C₇)
ou
les groupes R₁, R₂, et R₃ forment ensemble avec les atomes d'azote auxquels ils sont liés un système hétérocyclique de 5 à 10 chaînons,
n₁ est un nombre allant de 2 à 50 et au moins un des groupes R₁, R₃, et R₄ représente un groupe de formule II; le composant b) représente au moins un composé de formule III, 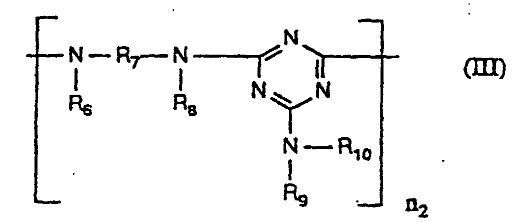 dans laquelle
R₆ et R₈ représentent indépendamment l'un de l'autre un atome d'hydrogène, un groupe alkyle en C₁ à C₁₂, cycloalkyle en C₅ à C₁₂, cycloalkyle en C₅ à C₁₂ substitué par un groupe alkyle en C₁ à C₄, phényle, phényle substitué par un groupe -OH et/ou alkyle en C₁ à C₁₀, phénylalkyle en C₇ à C₉, phénylalkyle en C₇ à C₉ substitué sur le groupe phényle par un groupe -OH et/ou alkyle en C₁ à C₁₀ ou un groupe de formule II,
R₇ représente un groupe alkylène en en C₂ à C₁₈, cycloalkylène en C₅ à C₇ ou (alkylène en C₁ à C₄)di(cycloalkylène en C₅ à C₇)
ou
les groupes R₆, R₇, et R₈ forment ensemble avec les atomes d'azote auxquels ils sont liés un système hétérocyclique de 5 à 10 chaînons,
R₉ et R₁₀ représentent indépendamment l'un de l'autre un groupe alkyle en C₁ à C₁₂, cycloalkyle en C₅ à C₁₂, cycloalkyle en C₅ à C₁₂ substitué par un groupe alkyle en C₁ à C₄, phényle, phényle substitué par un groupe -OH et/ou alkyle en C₁ à C₁₀, phénylalkyle en C₇ à C₉, phénylalkyle en C₇ à C₉ substitué sur le groupe phényle par un groupe -OH et/ou alkyle en C₁ à C₁₀ ou un groupe de formule II, ou
R₉ et R₁₀ forment ensemble avec l'atome d'azote auquel ils sont liés un système hétérocyclique de 5 à 10 chaînons,
n₂ est un nombre allant de 2 à 50 et au moins un des groupes R₆, R₈, R₉ et R₁₀ représente un groupe de formule (II);
le composant d) est au moins un composé des formules Va et Vb, 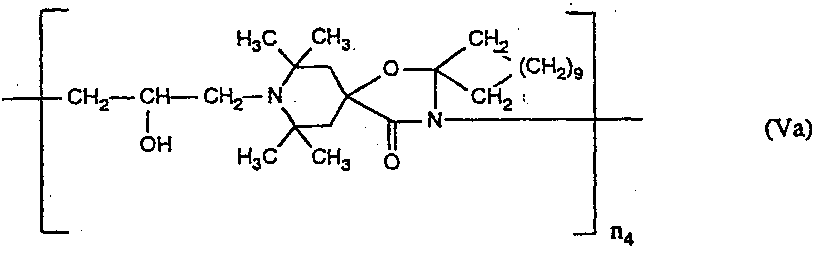 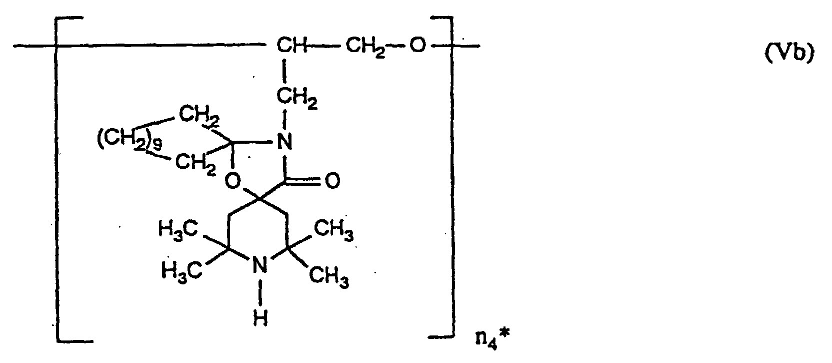 dans lesquelles n₄ et n₄* représentent indépendamment l'un de l'autre un nombre de 2 à 50;
avec la condition que (1) soient exclus le mélange de stabilisants contenant au moins un composé de formule I, au moins un composé de formule III et au moins un composé de formule VI, 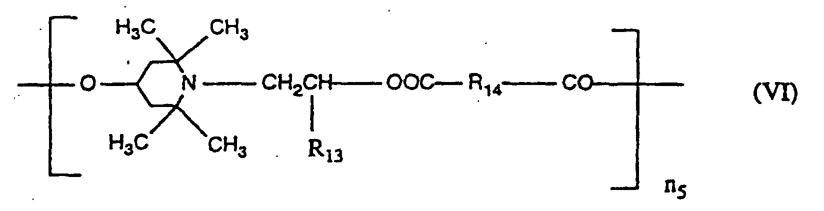 dans laquelle R₁₃ représente un atome d'hydrogène ou un groupe méthyle, R₁₄ représente une simple liaison ou un groupe alkylène en C₁ à C₁₀ et n₅ représente un nombre allant de 2 à 100,

2. Mélange de stabilisants selon la revendication 1, dans lequel R₅ représente un atome d'hydrogène, un groupe alkyle en C₁ à C₄, allyle, benzyle ou acétyle.

3. Mélange de stabilisants selon la revendication 1, dans lequel R₅ est un atome d'hydrogène ou un groupe méthyle.

4. Mélange de stabilisants selon la revendication 1, dans lequel
R₁, R₃, et R₄ représentent indépendamment les uns des autres un groupe alkyle en C₁ à C₁₀, cycloalkyle en C₅ à C₇, cycloalkyle en C₅ à C₇ substitué par un groupe alkyle en C₁ à C₄, phényle, phényle substitué par un groupe -OH et/ou alkyle en C₁ à C₄, phénylalkyle en C₇ à C₉, phénylalkyle en C₇ à C₉ substitué sur le groupe phényle par un groupe -OH et/ou alkyle en C₁ à C₄ ou un groupe de formule II et
R₁ et R₃ représentent en outre, indépendamment l'un de l'autre, un atome d'hydrogène,
R₂ représente un groupe alkylène en C₂ à C₁₀, cycloalkylène en C₅ à C₇ ou (alkylène en C₁ à C₄) di(cycloalkylène en C₅ à C₇)
ou
les groupes R₁, R₂, et R₃ forment ensemble avec les atomes d'azote auxquels ils sont liés un système hétérocyclique de 5 à 7 chaînons,
n₁ est un nombre allant de 2 à 40,
R₆ et R₈ représentent indépendamment l'un de l'autre un atome d'hydrogène, un groupe alkyle en C₁ à C₁₀, cycloalkyle en C₅ à C₇, cycloalkyle en C₅ à C₇ substitué par un groupe alkyle en C₁ à C₄, phényle, phényle substitué par un groupe -OH et/ou alkyle en C₁ à C₄, phénylalkyle en C₇ à C₉, phénylalkyle en C₇ à C₉ substitué sur le groupe phényle par un groupe -OH et/ou alkyle en C₁ à C₄ ou un groupe de formule II,
R₇ représente un groupe alkylène en C₂ à C₁₀, cycloalkylène en C₅ à C₇ ou (alkylène en C₁ à C₄)di(cycloalkylène en C₅ à C₇)
ou
les groupes R₆, R₇, et R₈ forment ensemble avec les atomes d'azote auxquels ils sont liés un système hétérocyclique de 5 à 7 chaînons,
R₉ et R₁₀ représentent indépendamment l'un de l'autre un groupe alkyle en C₁ à C₁₀, cycloalkyle en C₅ à C₇, cycloalkyle en C₅ à C₇ substitué par un groupe alkyle en C₁ à C₄, phényle, phényle substitué par un groupe -OH et/ou alkyle en C₁ à C₄, phénylalkyle en C₇ à C₉, phénylalkyle en C₇ à C₉ substitué sur le groupe phényle par un groupe -OH et/ou alkyle en C₁ à C₄ ou un groupe de formule II, ou
R₉ et R₁₀ forment ensemble avec l'atome d'azote auquel ils sont liés un système hétérocyclique de 5 à 7 chaînons,
n₂ est un nombre allant de 2 à 40;
n₄ et n₄* sont indépendamment l'un de l'autre un nombre allant de 2 à 40.

5. Mélange de stabilisants selon la revendication 1, dans lequel
R₁ et R₃ représentent indépendamment l'un de l'autre un atome d'hydrogène, un groupe alkyle en C₁ à C₈, cycloalkyle en C₅ à C₇, phényle, benzyle ou un groupe de formule II,
R₂ représente un groupe alkylène en C₂ à C₈, cyclohexylène ou méthylèndi(cyclohexylène),
R₄ représente un groupe alkyle en C₁ à C₁₀, cycloalkyle en C₅ à C₇, cycloalkyle en C₅ à C₇ substitué par un groupe alkyle en C₁ à C₄, et
n₁ est un nombre allant de 2 à 25;
R₆ et R₈ représentent indépendamment l'un de l'autre un atome d'hydrogène, un groupe alkyle en C₁ à C₈, cycloalkyle en C₅ à C₇, phényle, benzyle ou un groupe de formule II,
R₇ représente un groupe alkylène en C₂ à C₈, cyclohexylène ou méthylèndi-(cyclohexylène),
R₉ et R₁₀ représentent indépendamment l'un de l'autre un groupe alkyle en C₁ à C₈, cycloalkyle en C₅ à C₇, phényle, benzyle ou un groupe de formule II, ou
R₉ et R₁₀ forment ensemble avec l'atome d'azote auquel ils sont liés un groupe 1-Pyrrolidyle, Pipéridino, Morpholino, 1-Pipérazinyle, 4-Méthyl-1-pipérazinyle, 1-Hexahydroazépinyle, 5,5,7-Triméthyl-1-homopipérazinyle ou 4,5,5,7-Tétraméthyl-1-homo-pipérazinyle et
n₂ est un nombre allant de 2 à 25; et
n₄ et n₄* sont indépendamment l'un de l'autre un nombre allant de 2 à 25.

6. Mélange de stabilisants selon la revendication 1, dans lequel n₁, n₂, n₄ et n₄* représentent indépendamment les uns des autres un nombre de 2 à 20.

7. Mélange de stabilisants selon la revendication 1, dans lequel
R₁ et R₃ représentent indépendamment l'un de l'autre un atome d'hydrogène, un groupe alkyle en C₁ à C₄ ou un groupe de formule II, dans laquelle
R₅ est un atome d'hydrogène ou un groupe méthyle,
R₂ représente un groupe alkylène en C₂ à C₆,
R₄ représente un groupe alkyle en C₁ à C₁₀ ou cyclohexyle et
n₁ représente un nombre allant de 2 à 20;
R₆ et R₈ représentent indépendamment l'un de l'autre un atome d'hydrogène, un groupe alkyle en C₁ à C₄ ou un groupe de formule II, dans laquelle
R₅ est un atome d'hydrogène ou un groupe méthyle,
R₇ est un groupe alkylène en C₂ à C₆,
R₉ et R₁₀ sont indépendamment l'un de l'autre un groupe alkyle en C₁ à C₈ ou un groupe de formule II,
dans laquelle R₅ a la signification ci-dessus indiquée, ou
R₉ et R₁₀ forment ensemble avec l'atome d'azote auquel ils sont liés un groupe Morpholino et
n₂ représente un nombre allant de 2 à 20; et
n₄ et n₄* sont indépendamment l'un de l'autre un nombre allant de 2 à 20.

8. Mélange de stabilisants selon la revendication 1,
dans lequel le composé de formule I est 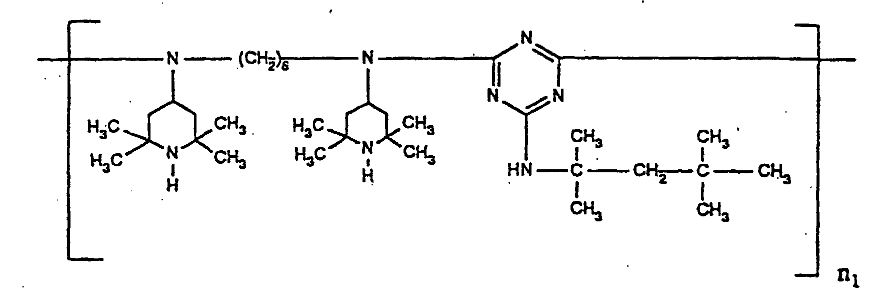 ou 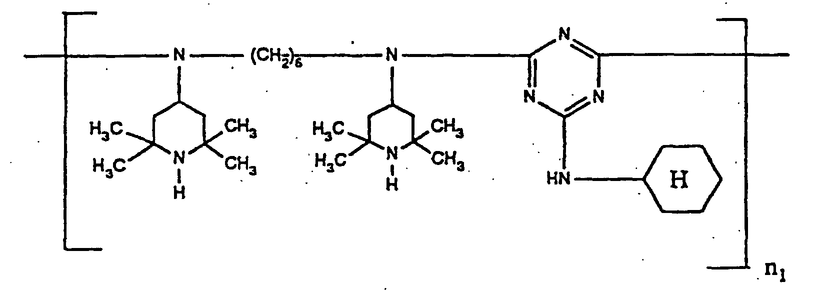 et le composé de formule III représente 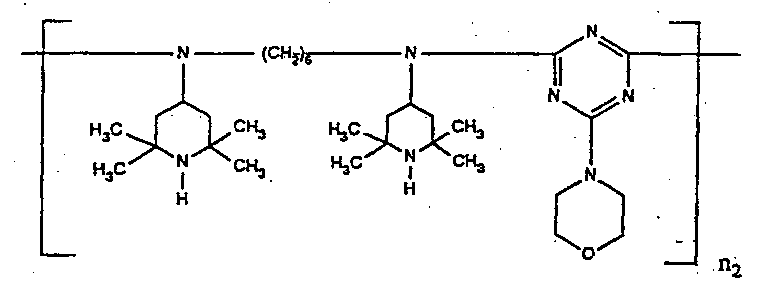 et
n₁, n₂, n₄ et n₁* représentent indépendamment les uns des autres un nombre de 2 à 20.

9. Mélange de stabilisants selon la revendication 1, contenant les composés 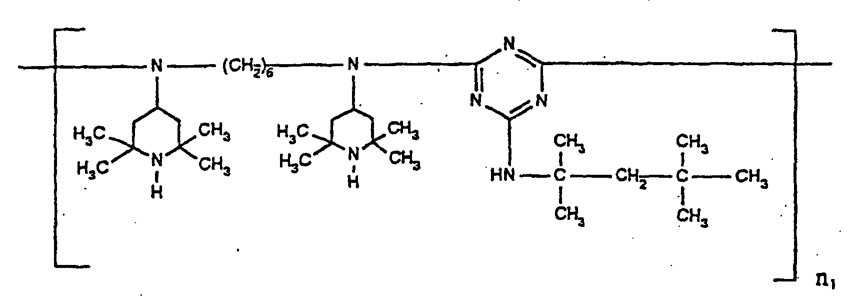 et 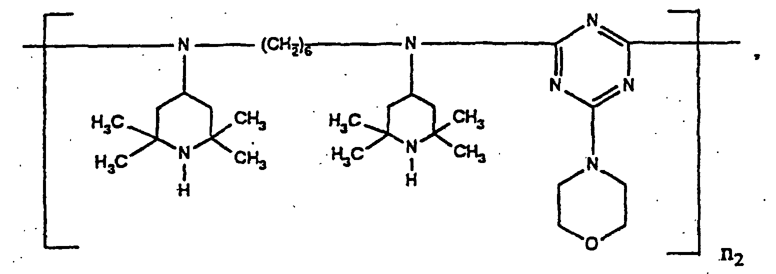 formules dans lesquelles n₁ et n₂ représentent un nombre de 2 à 20.

10. Mélange de stabilisants selon la revendication 1, contenant un mélange des composés Va et Vb, dans lequel n₄ et n₄* sont indépendamment l'un de l'autre un nombre de 2 à 20, et le composé 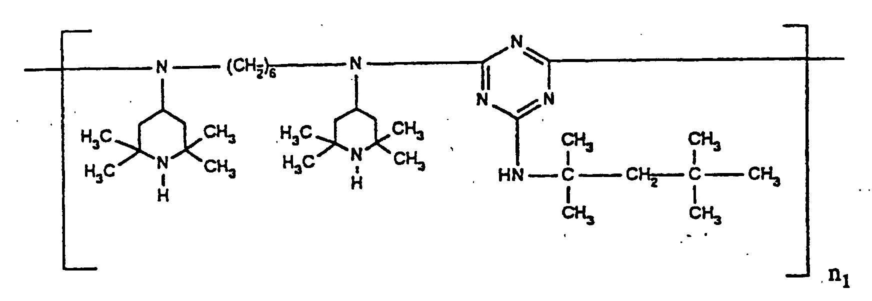 ou 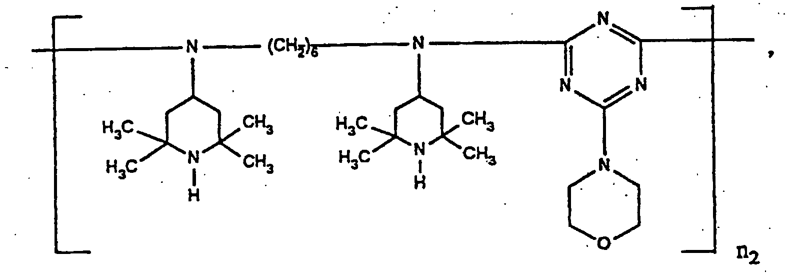 dans lequel n₁ et n₂ représentent indépendamment l'un de l'autre un nombre de 2 à 20,

11. Composition contenant un matériau organique sensible à la dégradation par oxydation, thermique ou induite par la lumière et un mélange de stabilisants selon la revendication 1.

12. Composition selon la revendication 11, dans laquelle le matériau organique est une polyoléfine.

13. Composition selon la. revendication 11, dans laquelle le matériau organique est le polyéthylène, le polypropylène ou un copolymère de polyéthylène ou de polypropylène.

14. Utilisation d'un mélange de stabilisants selon la revendication 1 pour stabiliser un matériau organique sensible à la dégradation par oxydation, thermique ou induite par la lumière.
